(19) Europäisches Patentamt
European Patent Office
Office européen des brevets

(11) **EP 3 594 858 A1**

(12) **EUROPEAN PATENT APPLICATION**
published in accordance with Art. 153(4) EPC

(43) Date of publication:
**15.01.2020 Bulletin 2020/03**

(51) Int Cl.:
**G06N 3/04** *(2006.01)*

(21) Application number: **18763609.7**

(86) International application number:
**PCT/JP2018/005828**

(22) Date of filing: **20.02.2018**

(87) International publication number:
**WO 2018/163790 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.03.2017 JP 2017041812**

(71) Applicant: **Sony Corporation**
**Tokyo 108-0075 (JP)**

(72) Inventor: **FUKUI Akira**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE**

(57)    The present technology relates to an information processing apparatus that enables reduction of the amount of calculation and the number of parameters of a neural network.

A binary operation layer configures a layer of a neural network, performs a binary operation using binary values of layer input data, and outputs a result of the binary operation as layer output data.

The present technology can be applied to a neural network.

*FIG. 7*

**Description**

TECHNICAL FIELD

The present technology relates to an information processing apparatus, and more particularly to an information processing apparatus that enables reduction of the amount of calculation and the number of parameters of a neural network, for example.

BACKGROUND ART

For example, there is a detection device that detects whether or not a predetermined object appears in an image using a difference between pixel values of two pixels among pixels configuring the image (see, for example, Patent Document 1).

In such a detection apparatus, each of plurality of weak classifiers obtains an estimated value indicating whether or not the predetermined object appears in the image according to the difference between pixel values of two pixels of the image. Then, weighted addition of the respective estimated values of the plurality of weak classifiers is performed, and whether or not the predetermined object appears in the image is determined according to a weighted addition value obtained as a result of the weighted addition.

Learning of the weak classifiers and weights used for the weighted addition is performed by boosting such as AdaBoost.

CITATION LIST

PATENT DOCUMENT

Patent Document 1: Japanese Patent No. 4517633

SUMMARY OF THE INVENTION

PROBLEMS TO BE SOLVED BY THE INVENTION

In recent years, convolutional neural network (CNN) having a convolution layer has attracted attention for image clustering and the like.

However, to improve the performance of a neural network (NN) such as CNN, the number of parameters of the NN increases and the amount of calculation also increases.

The present technology has been made in view of the foregoing, and enables reduction of the amount of calculation and the number of parameters of an NN.

SOLUTIONS TO PROBLEMS

A first information processing apparatus according to the present technology is an information processing apparatus configuring a layer of a neural network, and configured to perform a binary operation using binary values of layer input data to be input to the layer, and output a result of the binary operation as layer output data to be output from the layer.

In the above first information processing apparatus, the layer of a neural network is configured, and the binary operation using binary values of layer input data to be input to the layer is performed, and the result of the binary operation is output as layer output data to be output from the layer.

A second information processing apparatus according to the present technology is an information processing apparatus including a generation unit configured to perform a binary operation using binary values of layer input data to be input to a layer, and generate a neural network including a binary operation layer that is the layer that outputs a result of the binary operation as layer output data to be output from the layer.

In the above second information processing apparatus, the binary operation using binary values of layer input data to be input to a layer is performed, and the neural network including a binary operation layer that is the layer that outputs a result of the binary operation as layer output data to be output from the layer is generated.

Note that the first and second information processing apparatuses can be realized by causing a computer to execute a program. Such a program can be distributed by being transmitted via a transmission medium or by being recorded on a recording medium.

EFFECTS OF THE INVENTION

According to the present technology, the amount of calculation and the number of parameters of an NN can be reduced.

Note that effects described here are not necessarily limited, and any of effects described in the present disclosure may be exhibited.

BRIEF DESCRIPTION OF DRAWINGS

Fig. 1 is a block diagram illustrating a configuration example of hardware of a personal computer (PC) that functions as an NN or the like to which the present technology is applied.

Fig. 2 is a block diagram illustrating a first configuration example of the NN realized by a PC 10.

Fig. 3 is a diagram for describing an example of processing of convolution of a convolution layer 104.

Fig. 4 is a diagram illustrating convolution kernels F with m $\times$ n $\times$ c (in) = 3 $\times$ 3 $\times$ 3.

Fig. 5 is a diagram for describing A $\times$ B (> 1) convolution.

Fig. 6 is a diagram for describing 1 $\times$ 1 convolution.

Fig. 7 is a block diagram illustrating a second configuration example of the NN realized by the PC 10.

Fig. 8 is a diagram for describing an example of processing of a binary operation of a binary operation layer 112.

Fig. 9 is a diagram illustrating a state in which a binary operation kernel $G^{(k)}$ is applied to an object to be processed.

Fig. 10 is a diagram illustrating an example of a selection method for selecting binary values to be objects for the binary operation of the binary operation layer 112.

Fig. 11 is a flowchart illustrating an example of processing during forward propagation and back propagation of a convolution layer 111 and the binary operation layer 112 of an NN 110.

Fig. 12 is a diagram illustrating a simulation result of a simulation performed for a binary operation layer.

Fig. 13 is a block diagram illustrating a third configuration example of the NN realized by the PC 10.

Fig. 14 is a diagram for describing an example of processing of a binary operation of a value maintenance layer 121.

Fig. 15 is a diagram illustrating a state in which a value maintenance kernel $H^{(k)}$ is applied to an object to be processed.

Fig. 16 is a block diagram illustrating a configuration example of an NN generation device that generates an NN to which the present technology is applied.

Fig. 17 is a diagram illustrating a display example of a user I/F 203.

Fig. 18 is a diagram illustrating an example of a program as an entity of an NN generated by a generation unit 202.

MODE FOR CARRYING OUT THE INVENTION

<Configuration Example of Hardware of PC>

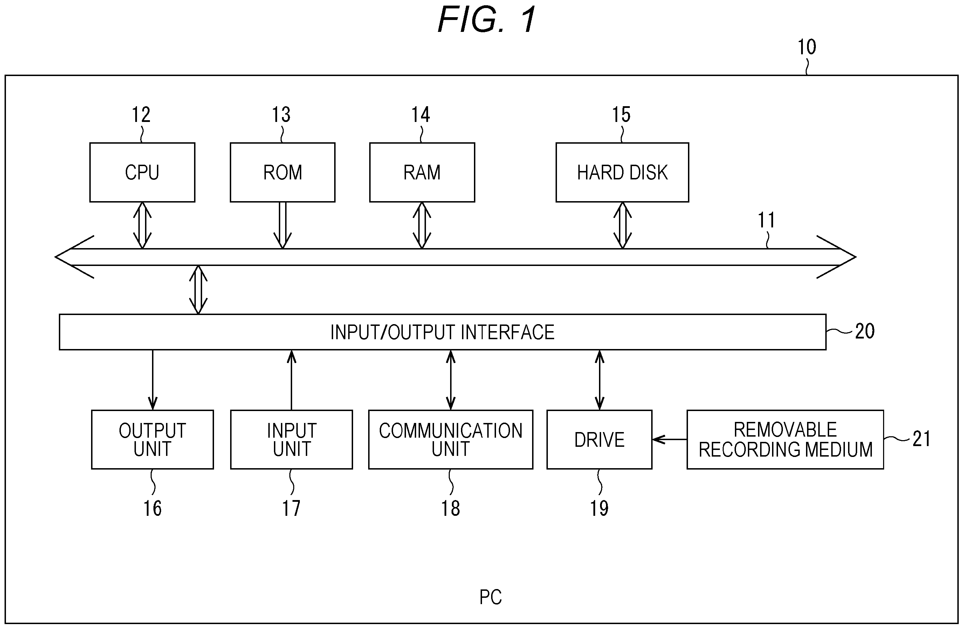

Fig. 1 is a block diagram illustrating a configuration example of hardware of a personal computer (PC) that functions as a neural network (NN) or the like to which the present technology is applied.

In Fig. 1, a PC 10 may be a stand-alone computer, a server of a server client system, or a client.

The PC 10 has a central processing unit (CPU) 12 built in, and an input/output interface 20 is connected to the CPU 12 via a bus 11.

When a command is input through the input/output interface 20 by a user or the like who operates an input unit 17, for example, the CPU 12 executes a program stored in a read only memory (ROM) 13 according to the command. Alternatively, the CPU 12 loads the program stored in a hard disk 15 into a random access memory (RAM) 14 and executes the program.

Thereby, the CPU 12 performs various types of processing to cause the PC 10 to function as a device having a predetermined function. Then, the CPU 12 causes an output unit 16 to output or causes a communication unit 18 to transmit the processing results of the various types of processing, and further, causes the hard disk 15 to record the processing results, via the input/output interface 20, as necessary, for example.

Note that the input unit 17 is configured by a keyboard, a mouse, a microphone, and the like. Furthermore, the output unit 16 is configured by a liquid crystal display (LCD), a speaker, and the like.

Furthermore, the program executed by the CPU 12 can be recorded in advance in the hard disk 15 or the ROM 13 as a recording medium built in the PC 10.

Alternatively, the program can be stored (recorded) in a removable recording medium 21. Such a removable recording medium 21 can be provided as so-called package software. Here, examples of the removable recording medium 21 include a flexible disk, a compact disc read only memory (CD-ROM), a magneto optical (MO) disk, a digital versatile disc (DVD), a magnetic disk, a semiconductor memory, and the like.

Furthermore, the program can be downloaded to the PC 10 via a communication network or a broadcast network and installed in the built-in hard disk 15, other than being installed from the removable recording medium 21 to the PC 10, as described above. In other words, the program can be transferred in a wireless manner from a download site to the PC 10 via an artificial satellite for digital satellite broadcasting, or transferred in a wired manner to the PC 10 via a network such as a local area network (LAN) or the Internet, for example.

As described above, the CPU 12 executes the program to cause the PC 10 to function as a device having a predetermined function.

For example, the CPU 12 causes the PC 10 to function as an information processing apparatus that performs processing of the NN (each layer that configures the NN) and generation of the NN. In this case, the PC 10 functions as the NN or an NN generation device that generates the NN. Note that each layer of the NN can be configured by dedicated hardware, other than by general-purpose hardware such as the CPU 12 or a GPU. In this case, for example, a binary operation and another operation described below, which are performed in each layer of the NN, is performed by the dedicated hardware that configures the layer.

Here, for simplicity of description, regarding the NN realized by the PC 10, a case in which input data for the NN is an image (still image) having two-dimensional data of one or more channels will be described as an example.

In a case where the input data for the NN is an image, a predetermined object can be quickly detected (recognized) from the image, and pixel level labeling (semantic segmentation) and the like can be performed.

Note that, as the input data for the NN, one-dimensional data, two-dimensional data, or four or more dimensional data can be adopted, other than the two-dimensional data such as the image.

<Configuration Example of CNN>

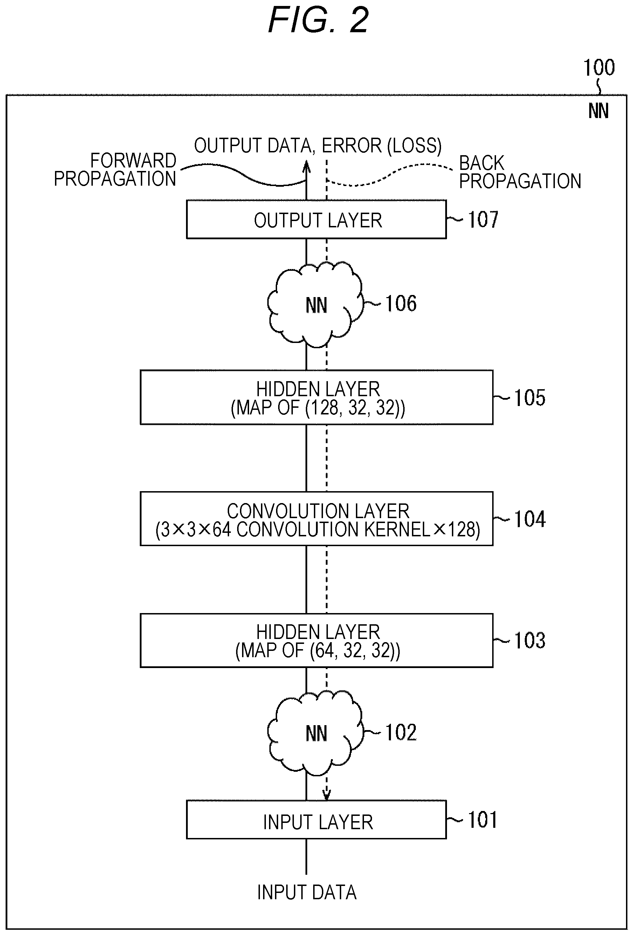

Fig. 2 is a block diagram illustrating a first configuration example of the NN realized by a PC 10.

In Fig. 2, an NN 100 is a convolutional neural network (CNN), and includes an input layer 101, an NN 102, a hidden layer 103, a convolution layer 104, a hidden layer 105, an NN 106, and an output layer 107.

Here, the NN is configured by appropriately connecting (units corresponding to neurons configuring) a plurality of layers including the input layer and the output layer. In the NN, a layer on an input layer side is also referred to as a lower layer and a layer on an output layer side is also referred to as an upper layer as viewed from a certain layer of interest.

Furthermore, in the NN, propagation of information (data) from the input layer side to the output layer side is also referred to as forward propagation, and propagation of information from the output layer side to the input layer side is also referred to as back propagation.

Images of R, G, and B three channels are, for example, supplied to the input layer 101 as the input data for the NN 100. The input layer 101 stores the input data for the NN 100 and supplies the input data to the NN 102 of the upper layer.

The NN 102 is an NN as a subset of the NN 100, and is configured by one or more layers (not illustrated). The NN 102 as a subset can include the hidden layers 103 and 105, the convolution layer 104, and other layers similar to layers described below.

In (a unit of) each layer of the NN 102, for example, a weighted addition value of data from the lower layer immediately before the each layer (including addition of so-called bias terms, as necessary) is calculated, and an activation function such as a rectified linear function is calculated using the weighted addition value as an argument, for example. Then, in each layer, an operation result of the activation function is stored and output to an upper layer immediately after the each layer. In the operation of the weighted addition value, a connection weight for connecting (units of) layers is used.

Here, in a case where the input data is a two-dimensional image, two-dimensional images output by the layers from the input layer 101 to the output layer 107 are called maps.

The hidden layer 103 stores a map as data from the layer on the uppermost layer side of the NN 102 and outputs the map to the convolution layer 104. Alternatively, the hidden layer 103 obtains an operation result of the activation function using a weighted addition value of the data from the layer on the uppermost layer side of the NN 102 as an argument, stores the operation result as the map, and outputs the map to the convolution layer 104, for example, similarly to the layer of the NN 102.

Here, the map stored by the hidden layer 103 is particularly referred to as an input map. The input map stored by the hidden layer 103 is layer input data for the convolution layer 103, where data input to a layer of the NN is called layer input data. Furthermore, the input map stored by the hidden layer 103 is also layer output data of the hidden layer 103, where data output from a layer of the NN is called layer output data.

In the present embodiment, the input map stored by the hidden layer 103 is configured by, for example, $32 \times 32$ (pixels) in height $\times$ width, and has 64 channels. As described above, the input map of 64 channels with $32 \times 32$ in height $\times$ width is hereinafter also referred to as input map of (64, 32, 32) (= (channel, height, width)).

The convolution layer 104 applies a convolution kernel to the input map of (64, 32, 32) from the hidden layer 103 to perform convolution for the input map of (64, 32, 32).

The convolution kernel is a filter that performs convolution, and in the present embodiment, the convolution kernel of the convolution layer 104 is configured in size of $3 \times 3 \times 64$ in height $\times$ width $\times$ channel, for example. As the size in height $\times$ width of the convolution kernel, a size equal to or smaller than the size in height $\times$ width of the input map is adopted, and as the number of channels of the convolution kernel (the size in a channel direction), a same value as the number of channels of the input map is adopted.

Here, a convolution kernel with the size of $a \times b \times c$ in height $\times$ width $\times$ channel is also referred to as an $a \times b \times c$ convolution kernel or an $a \times b$ convolution kernel, ignoring the channel. Moreover, convolution performed by applying the $a \times b \times c$ convolution kernel is also referred to as a $a \times b \times c$ convolution or a $a \times b$ convolution.

The convolution layer 104 slidingly applies a $3 \times 3 \times 64$ convolution kernel to the input map of (64, 32, 32) to perform $3 \times 3$ convolution of the input map.

That is, in the convolution layer 104, for example, pixels (group) at (spatially) the same position of all the channels in the input map of (64, 32, 32) are sequentially set as pixels (group) of interest, and a rectangular parallelepiped range with $3 \times 3 \times 64$ in height $\times$ width $\times$ channel (the same range (size) with the height $\times$ width $\times$ channel of the convolution kernel) centered on a predetermined position with the pixel of interest as a reference, in other words, for example, the position of the pixel of interest, is set as an object to be processed for convolution, on the input map of (64, 32, 32) .

Then, a product-sum operation of $3 \times 3 \times 64$ each data (pixel value) in the object to be processed for convolution, of the input map of (64, 32, 32), and a filter coefficient of a filter as the $3 \times 3 \times 64$ convolution kernel is performed, and a result of the product-sum operation is obtained as a result of convolution for the pixel of interest.

Thereafter, in the convolution layer 104, a pixel that has not been set as the pixel of interest is newly set as the pixel of interest, and similar processing is repeated, whereby the convolution kernel is applied to the input map while being slid according to the setting of the pixel of interest.

Here, a map as an image having the convolution result of the convolution layer 104 as a pixel value is also referred to as a convolution map.

In a case where all the pixels of the input map of each channel are set as the pixels of interest, the size in height $\times$ width of the convolution map becomes $32 \times 32$ (pixels) that is the same as the size in height $\times$ width of the input map.

Furthermore, in a case where the pixel of the input map of each channel is set as the pixel of interest at intervals of one or more pixels, in other words, pixels not set to the pixels of interest exist on the input map of each channel, the size in height $\times$ width of the convolution map becomes smaller than the size in height $\times$ width of the input map. In this case, pooling can be performed.

The convolution layer 104 has the same kinds of convolution kernels as the number of channels of the convolution map stored by the hidden layer 105 that is the upper layer immediately after the convolution layer 104.

In Fig. 2, the hidden layer 105 stores a convolution map of (128, 32, 32) (a convolution map of 128 channels with $32 \times 32$ in height $\times$ width).

Therefore, the convolution layer 104 has 128 types of $3 \times 3 \times 64$ convolution kernels.

The convolution layer 104 applies each of the 128 types of $3 \times 3 \times 64$ convolution kernels to the input map of (64, 32, 32) to obtain convolution map of a convolution map of (128, 32, 32), and outputs the convolution map of (128, 32, 32) as the layer output data of the convolution layer 104.

Note that the convolution layer 104 can output, as the layer output data, an operation result of the activation function, the operation result having been calculated using the convolution result obtained by applying the convolution kernel to the input map as an argument.

The hidden layer 105 stores the convolution map of (128, 32, 32) from the convolution layer 104 and outputs the convolution map of (128, 32, 32) to the NN 106. Alternatively, the hidden layer 105 obtains an operation result of the activation function using a weighted addition value of data configuring the convolution map of (128, 32, 32) from the convolution layer 104 as an argument, stores a map configured by the operation result, and outputs the map to the NN 106, for example.

The NN 106 is an NN as a subset of the NN 100, and is configured by one or more layers, similarly to the NN 102. The NN 106 as a subset can include the hidden layers 103 and 105, the convolution layer 104, and other layers similar to layers described below, similarly to the NN 102.

In each layer of the NN 106, for example, similarly to the NN 102, a weighted addition value of data from the lower layer immediately before the each layer is calculated, and the activation function is calculated using the weighted addition value as an argument. Then, in each layer, an operation result of the activation function is stored and output to an upper layer immediately after the each layer.

The output layer 107 calculates, for example, a weighted addition value of data from the lower layer, and calculates the activation function using the weighted addition value as an argument. Then, the output layer 107 outputs, for example, an operation result of the activation function as output data of the NN 100.

The above processing from the input layer 101 to the output layer 107 is processing at the forward propagation for detecting an object and the like, whereas at the back propagation for performing learning, error information regarding an error of the output data, which is to be propagated back to the previous lower layer, is obtained using error information from the subsequent upper layer, and the obtained error information is propagated back to the previous lower layer, in the input layer 101 to the output layer 107. Furthermore, in the input layer 101 to the output layer 107, the connection weight and the filter coefficient of the convolution kernel are updated using the error information from the upper layer, as needed.

<Processing of Convolution Layer 104>

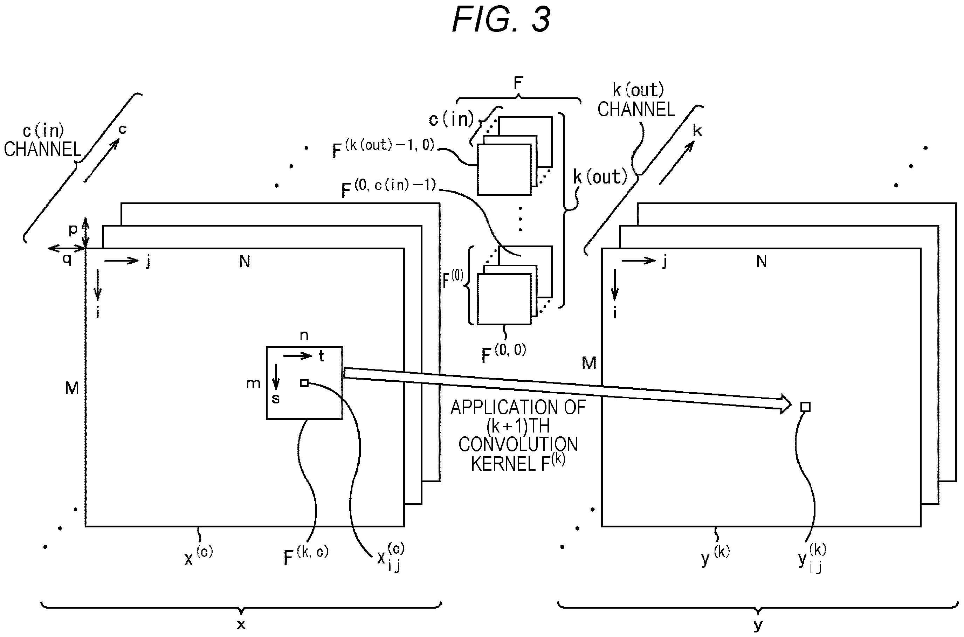

Fig. 3 is a diagram for describing an example of convolution processing of the convolution layer 104.

Here, the layer input data and layer output data for a layer of the NN are represented as x and y, respectively.

For the convolution layer 104, the layer input data and the layer output data are the input map and the convolution map, respectively.

In Fig. 3, a map (input map) x as layer input data x for the convolution layer 104 is a map of (c (in), M, N), in other words, an image of a c (in) channel with $M \times N$ in height $\times$ width.

Here, the map x of a (c + 1)th channel #c (c = 0, 1,..., c (in) - 1) among the maps x of (c (in), M, N) is represented as $x^{(c)}$.

Further, on the map $x^{(c)}$, for example, positions in a vertical direction and a horizontal direction, having an upper left position on the map $x^{(c)}$, as a reference (origin or the like), as predetermined positions, are represented as i and j, respectively, and data (pixel value) of the position (i, j) on the map $x^{(c)}$ is represented as $x_{ij}^{(c)}$.

A map (convolution map) y as layer output data y output by the convolution layer 104 is a map of (k (out), M, N), in other words, an image of a k (out) channel with $M \times N$ in height $\times$ width.

Here, the map y of a (k + 1)th channel #k (k = 0, 1,..., k (out) - 1) among the maps y of (k (out), M, N) is represented as $y^{(k)}$.

Further, in the map $y^{(k)}$, for example, positions in the vertical direction and the horizontal direction, having an upper left position on the map $y^{(k)}$, as a reference, as predetermined positions, are represented as i and j, respectively, and data (pixel value) of the position (i, j) of the map $y^{(k)}$ is represented as $y_{ij}^{(k)}$.

The convolution layer 104 has k (out) convolution kernels F with $m \times n \times c$ (in) in height $\times$ width $\times$ channel. Note that 1 <= m <= M and 1 <= n <= N.

Here, a (k + 1)th convolution kernel F, in other words, a convolution kernel F used for generation of the map $y^{(k)}$ of the channel #k, among the k (out) convolution kernels F, is represented as $F^{(k)}$.

The convolution kernel $F^{(k)}$ is configured by convolution kernels $F^{(k,0)}$, $F^{(k,1)}$,..., and $F^{(k,c(in)-1)}$ of the c (in) channel respectively applied to the maps $x^{(0)}$, $x^{(1)}$,..., and $x^{(c(in) - 1)}$ of the c (in) channel.

In the convolution layer 104, the $m \times n \times c$ (in) convolution kernel $F^{(k)}$ is slidingly applied to the map x of (c (in), M, N) to perform $m \times n$ convolution of the map x, and the map $y^{(k)}$ of the channel #k is generated as a convolution result.

The data $y_{ij}^{(k)}$ at the position (i, j) on the map $y^{(k)}$ is, for example, the convolution result of when the $m \times n \times c$ (in) convolution kernel $F^{(k)}$ is applied to a range of $m \times n \times c$ (in) in height $\times$ width $\times$ channel directions centered on the position (i, j) of a pixel of interest on the map $x^{(c)}$.

Here, as for the $m \times n$ convolution kernel $F^{(k)}$ and the range with $m \times n$ in height $\times$ width in a spatial direction (directions of i and j) of the map x to which the $m \times n$ convolution kernel $F^{(k)}$ is applied, positions in the vertical direction and the horizontal direction, as predetermined positions, with an upper left position in the $m \times n$ range as a reference, for example, are represented as s and t, respectively. For example, 0 <= s <= m - 1 and 0 <= t <= n - 1.

Furthermore, in a case where the $m \times n \times c$ (in) convolution kernel $F^{(k)}$ is applied to the range of $m \times n \times c$ (in) in height $\times$ width $\times$ channel directions centered on the position (i, j) of a pixel of interest on the map $x^{(c)}$, in a case where the pixel of interest is a pixel in a peripheral portion such as an upper left pixel on the map x, the convolution kernel $F^{(k)}$ protrudes to the outside of the map x, and absence of data of the map x to which the convolution kernel $F^{(k)}$ is to be applied exists.

Therefore, in the application of the convolution kernel $F^{(k)}$, to prevent occurrence of absence of data of the map x to which the convolution kernel $F^{(k)}$ is to be applied, predetermined data such as zero can be padded to a periphery of the map x. The number of data padded in the vertical direction from a boundary of the map x is represented as p, and the number of data padded in the horizontal direction is represented as q.

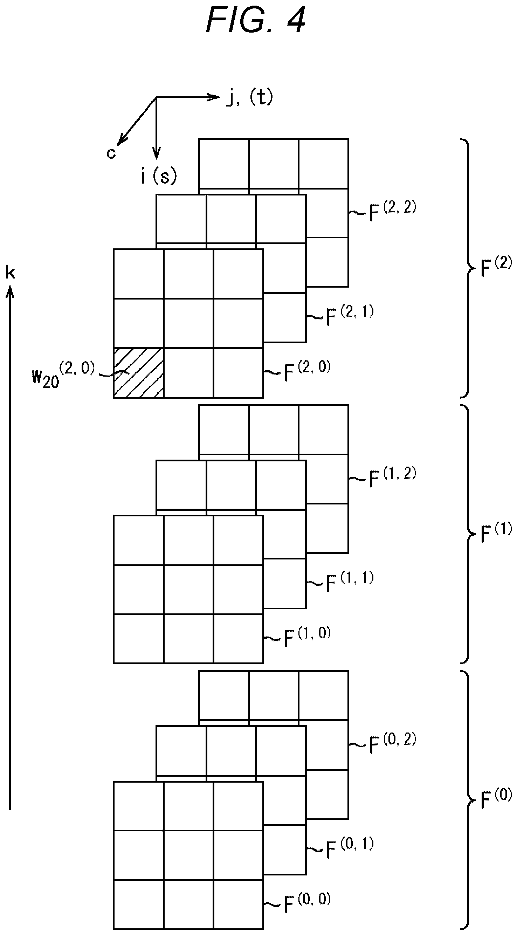

Fig. 4 is a diagram illustrating convolution kernels F with $m \times n \times c$ (in) = $3 \times 3 \times 3$ used for generation of three-channel maps y = $y^{(0)}$, $y^{(1)}$, and $y^{(2)}$.

The convolution kernel F has convolution kernels $F^{(0)}$, $F^{(1)}$, and $F^{(2)}$ used to generate $y^{(0)}$, $y^{(1)}$, and $y^{(2)}$.

The convolution kernel $F^{(k)}$ has convolution kernels $F^{(k,0)}$, $F^{(k,1)}$, and $F^{(k,2)}$ applied to the maps $x^{(0)}$, $x^{(1)}$, and $x^{(2)}$ of channels #0, 1, and 2.

A convolution kernel $F^{(k,c)}$ applied to the map $x^{(c)}$ of the channel #c is a convolution kernel with $m \times n$ = $3 \times 3$, and is configured by $3 \times 3$ filter coefficients.

Here, the filter coefficient at the position (s, t) of the convolution kernel $F^{(k, c)}$ is represented by $w_{st}^{(k, c)}$.

In the above-described convolution layer 104, the forward propagation for applying the convolution kernel F to the map x to obtain the map y is expressed by the expression (1).

[Expression 1]

$$\mathrm{data}\, y_{ij}^{(k)} = \sum_{c} y_{ij}^{(k, c)}$$

$$= \sum_{c} \sum_{s=0}^{m-1} \sum_{t=0}^{n-1} w_{st}^{(k, c)} x_{(i-p+s)(j-q+t)}^{(c)}$$

$$\dots \quad (1)$$

Furthermore, the back propagation is expressed by the expressions (2) and (3).

[Expression 2]

$$\frac{\partial E}{\partial w_{st}^{(k, c)}} = \sum_{i=0}^{M-m} \sum_{j=0}^{N-n} \frac{\partial E}{\partial y_{ij}^{(k)}} \frac{\partial y_{ij}^{(k)}}{\partial w_{st}^{(k, c)}}$$

$$= \sum_{i=0}^{M-m} \sum_{j=0}^{N-n} \frac{\partial E}{\partial y_{ij}^{(k)}} x_{(i-p+s)(j-q+t)}^{(c)}$$

$$\dots \quad (2)$$

[Expression 3]

$$\frac{\partial E}{\partial x_{ij}^{(c)}}$$

$$= \sum_{k} \sum_{s=0}^{m-1} \sum_{t=0}^{n-1} \frac{\partial E}{\partial y_{(i+p-s)(j+q-t)}^{(k)}} \frac{\partial y_{(i+p-s)(j+q-t)}^{(k)}}{\partial x_{ij}^{(c)}}$$

$$= \sum_{k} \sum_{s=0}^{m-1} \sum_{t=0}^{n-1} \frac{\partial E}{\partial y_{(i+p-s)(j+q-t)}^{(k)}} w_{st}^{(k, c)}$$

$$\dots \quad (3)$$

Here, E represents (an error function representing) an error of the output data of the NN (here, the NN 100, for example).

$\partial E/\partial w_{st}^{(k, c)}$ in the expression (2) is a gradient of the error (E) for updating the filter coefficient $w_{st}^{(k, \text{the } c)}$ of the convolution kernel $F^{(k, c)}$ by a gradient descent method. At the learning of the NN 100, the filter coefficient $w_{st}^{(k, c)}$ of the convolution kernel $F^{(k, c)}$ is updated using the gradient $\partial E/\partial w_{st}^{(k, c)}$ of the error of the expression (2).

Furthermore, $\partial E/\partial 3X_{ij}^{(c)}$ in the expression (3) is error information propagated back to the lower layer immediately before the convolution layer 104 at the learning of the NN 100.

Here, the layer output data $y_{ij}^{(k)}$ of the convolution layer 104 is the layer input data $x_{ij}^{(c)}$ of the hidden layer 105 that is the upper layer immediately after the convolution layer 104.

Therefore, $\partial E/\partial y_{ij}^{(k)}$ on the right side in the expression (2) represents a partial differential in the layer output data $y_{ij}^{(k)}$ of the convolution layer 104 but is equal to $\partial E/\partial 3X_{ij}^{(c)}$ obtained in the hidden layer 105 and is error information propagated back to the convolution layer 104 from the hidden layer 105.

In the convolution layer 104, $\partial E/\partial w_{st}^{(k,c)}$ in the expression (2) is obtained using the error information $\partial E/\partial y_{ij}^{(k)}$ from the hidden layer 105 that is the upper layer ($\partial E/\partial x_{ij}^{(c)}$ obtained in the hidden layer 105).

Similarly, $\partial E/\partial y_{(i+p-s)\,(j+q-t)}^{(k)}$ on the right side in the expression (3) is error information propagated back to the convolution layer 104 from the hidden layer 105, and in the convolution layer 104, the error information $\partial E/\partial 3X_{ij}^{(c)}$ in the expression (3) is obtained using the error information $\partial E/\partial y_{(i+p-s)(j+q-t)}^{(k)}$ from the hidden layer 105 that is the upper layer.

By the way, for the NN, CNN's network design like the NN 100 attracts attention from the viewpoint of NN's evolution.

In recent years, a large number of CNNs in each of which multiple convolutional layers for performing $1 \times 1$ convolution and $3 \times 3$ convolution are stacked have been proposed. For example, AlexNet, GoogleNet, VGG, ResNet, and the like are known as CNNs that have learned using ImageNet datasets.

In the learning of the CNN, for the convolutional layer, the filter coefficient $W_{st}^{(k,c)}$ of the $m \times n \times c$ (in) convolution kernel $F^{(k)}$, in other words, of the convolution kernel $F^{(k)}$ having the thickness by the number of channels c (in) of the map x is learned.

In the convolution layer, the connection of the map $y^{(k)}$ and the map x is so-called dense connection in which all the $m \times n \times c$ (in) data $x_{ij}^{(c)}$ of the map x are connected with one piece of data $y_{ij}^{(k)}$ of the map $y^{(k)}$ using $m \times n \times c$ (in) filter coefficients $W_{st}^{(k,c)}$ of the convolution kernel $F^{(k)}$ as the connection weights.

By the way, when a term that reduces the filter coefficient $W_{st}^{(k,c)}$ is included in the error function E and learning of the (filter coefficient $w_{st}^{(k,c)}$) of the convolution kernel $F^{(k)}$ is performed, the connection of the map $y^{(k)}$ and the map x becomes so thin.

In other words, the filter coefficient $w_{st}^{(k,c)}$ as the connection weight between the data $x_{ij}^{(c)}$ having (almost) no information desired to be extracted by the convolution kernel $F^{(k)}$, and the data $y_{ij}^{(k)}$ becomes a small value close to zero, and the data $x_{ij}^{(c)}$ connected with one piece of data $y_{ij}^{(k)}$ becomes substantially sparse.

This means that the $m \times n \times c$ (in) filter coefficients $w_{st}^{(k,c)}$ of the convolution kernel $F^{(k)}$ have redundancy, and further, recognition (detection) and the like similar to the case of using the convolution kernel $F^{(k)}$ can be performed by using a so-called approximation kernel for approximating the convolution kernel $F^{(k)}$ in which the number of filter coefficients is (actually or substantially) made smaller than that of the convolution kernel $F^{(k)}$, in other words, the calculation amount and the number of filter coefficients (connection weights) as the number of parameters of the NN can be reduced while (almost) maintaining the performance of the recognition and the like.

In the present specification, a binary operation layer as a layer of the NN having new mathematical characteristics is proposed on the basis of the above findings.

The binary operation layer performs a binary operation using a binary value of the layer input data input to the binary operation layer, and outputs a result of the binary operation as the layer output data output from the binary operation layer. The binary operation layer has a similar object to be processed to the convolution operation, also has the effect of regularization by using a kernel with a small number of parameters to be learned, avoids over learning by suppressing the number of parameters larger than necessary, and can expect improvement of the performance.

Note that, as for the NN, many examples that the performance of recognition and the like is improved by defining a layer having new mathematical characteristics and performing learning with an NN having a network configuration including the defined layer have been reported. For example, a layer called Batch Normalization of Google enables stable learning of a deep NN (an NN having a large number of layers) by normalizing the average and variance of inputs and propagating the normalized values to the subsequent stage (upper layer).

Hereinafter, the binary operation layer will be described.

For example, any $A \times B$ (> 1) convolution, such as $3 \times 3$ convolution, can be approximated using a binary operation layer.

In other words, the $A \times B$ (> 1) convolution can be approximated by, for example, $1 \times 1$ convolution and a binary operation.

<Approximation of $A \times B$ Convolution Using Binary Operation Layer>

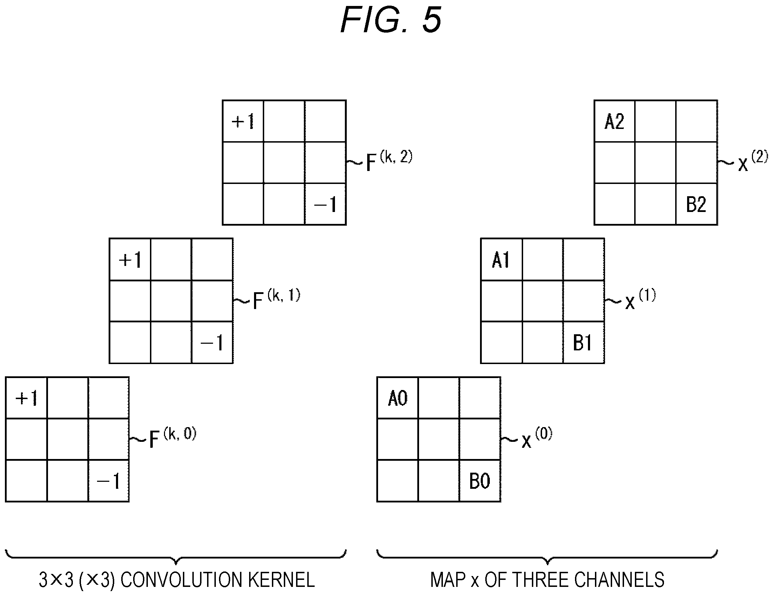

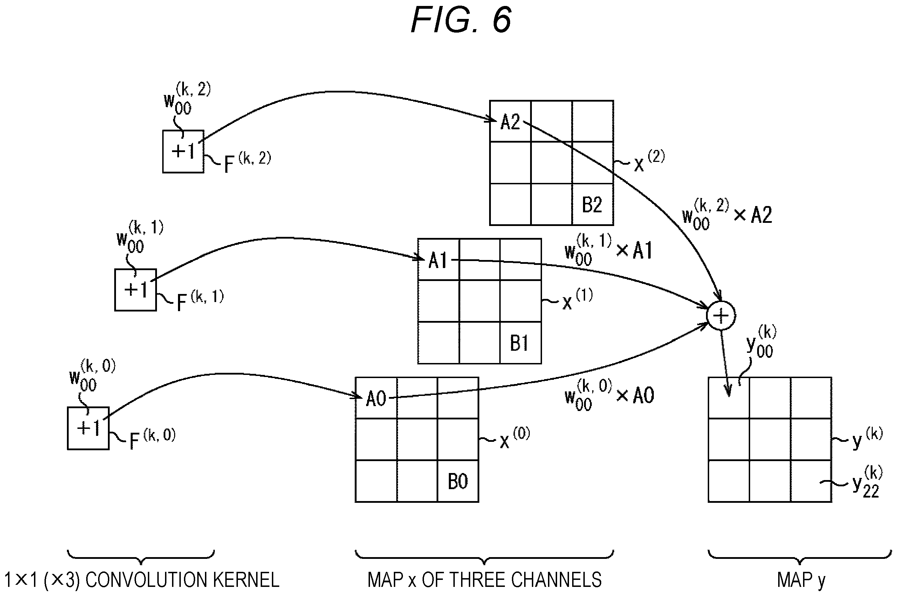

Approximation of the $A \times B$ (> 1) convolution using the binary operation layer, in other words, approximation of the $A \times B$ (> 1) convolution by the $1 \times 1$ convolution and the binary operation will be described with reference to Figs. 5 and 6.

Fig. 5 is a diagram for describing the $A \times B$ (> 1) convolution.

In other words, Fig. 5 illustrates an example of three-channel convolution kernels $F^{(k,0)}$, $F^{(k,1)}$, and $F^{(k,2)}$ for performing convolution with $A \times B = 3 \times 3$ and three-channel maps $x^{(0)}$, $x^{(1)}$, and $x^{(2)}$ to which the convolution kernels $F^{(k,c)}$ are applied.

Note that, in FIG. 5, to simplify the description, the map $x^{(c)}$ is assumed to be a $3 \times 3$ map.

For the $3 \times 3$ filter coefficients of the convolution kernel $F^{(k,c)}$, the upper left filter coefficient is +1 and the lower right filter coefficient is -1 by learning. Furthermore, the other filter coefficients are (approximately) zero.

For example, in convolution that requires edge detection in a diagonal direction, the convolution kernel $F^{(k,c)}$ having the filter coefficients as described above is obtained by learning.

In Fig. 5, the upper left data in the range of the map $x^{(c)}$ to which the convolution kernel $F^{(k,c)}$ is applied is A#c, and the lower right data is B#c.

In a case where the convolution kernel $F^{(k,c)}$ in Fig. 5 is applied to the range of the map $x^{(c)}$ in Fig. 5 and convolution is performed, the data $y_{ij}^{(k)}$ obtained as a result of the convolution is $y_{ij}^{(k)}$ = A0 + A1 + A2 - (B0 + B1 + B2).

Fig. 6 is a diagram for describing $1 \times 1$ convolution.

In other words, Fig. 6 illustrates an example of three-channel convolution kernels $F^{(k,0)}$, $F^{(k,1)}$, and $F^{(k,2)}$ for performing convolution with $1 \times 1$, three-channel maps x(0), x(1), and x(2) to which the convolution kernels $F^{(k,c)}$ are applied, and the map $y^{(k)}$ as a result of convolution obtained by applying the convolution kernel $F^{(k,c)}$ to the map $x^{(c)}$.

In Fig. 6, the map $x^{(c)}$ is configured similarly to the case in Fig. 5. Furthermore, the map $y^{(k)}$ is a $3 \times 3$ map, similarly to the map $x^{(c)}$.

Furthermore, the convolution kernel $F^{(k,c)}$ that performs the $1 \times 1$ convolution has one filter coefficient $w_{00}^{(k,c)}$.

In a case where the $1 \times 1$ convolution kernel $F^{(k,c)}$ in Fig. 6 is applied to the upper left pixel on the map $x^{(c)}$ and convolution is performed, the data $y_{00}^{(k)}$ in the upper left on the map $y^{(k)}$ is $y_{00}^{(k)}$ = $w_{00}^{(k,0)} \times$ A0 + $w_{00}^{(k,1)} \times$ A1 + $w_{00}^{(k,2)} \times$ A2.

Therefore, when the filter coefficient $W_{00}^{(k,c)}$ is 1, the data (convolution result) $y_{00}^{(k)}$ obtained by applying the $1 \times 1$ convolution kernel $F^{(k,c)}$ to the upper left pixel on the map $x^{(c)}$ is $y_{00}^{(k)}$ = A0 + A1 + A2.

Similarly, the lower right data $Y_{22}^{(k)}$ on the map $y^{(k)}$, which is obtained by applying the $1 \times 1$ convolution kernel $F^{(k,c)}$ to the lower right pixel on the map $x^{(c)}$ is $Y_{22}^{(k)}$ = B0 + B1 + B2.

Therefore, by performing a binary operation $y_{00}^{(k)}$ - $Y_{22}^{(k)}$ = (A0 + A1 + A2) - (B0 + B1 + B2) for obtaining a difference between the upper left data $y_{00}^{(k)}$ and the lower right data $Y_{22}^{(k)}$ on the map $y^{(k)}$, for the map $y^{(k)}$ obtained as a result of the $1 \times 1$ convolution, the data $y_{ij}^{(k)}$ = A0 + A1 + A2 - (B0 + B1 + B2) similar to the case of applying the $3 \times 3$ convolution kernel $F^{(k,c)}$ in Fig. 5 can be obtained.

From the above, the $A \times B$ (> 1) convolution can be approximated by the $1 \times 1$ convolution and the binary operation.

Now, assuming that the channel direction is ignored for the sake of simplicity, the product-sum operation using $A \times B$ filter coefficients is performed in the $A \times B$ (> 1) convolution.

Meanwhile, in the $1 \times 1$ convolution, a product is calculated using one filter coefficient as a parameter. Furthermore, in the binary operation for obtaining a difference between binary values, a product-sum operation using +1 and -1 as filter coefficients, in other words, a product-sum operation using two filter coefficients is performed.

Therefore, according to the combination of the $1 \times 1$ convolution and the binary operation, the number of filter coefficients as the number of parameters and the calculation amount can be reduced as compared with the $A \times B$ (> 1) convolution.

<Configuration Example of NN Including Binary Operation Layer>

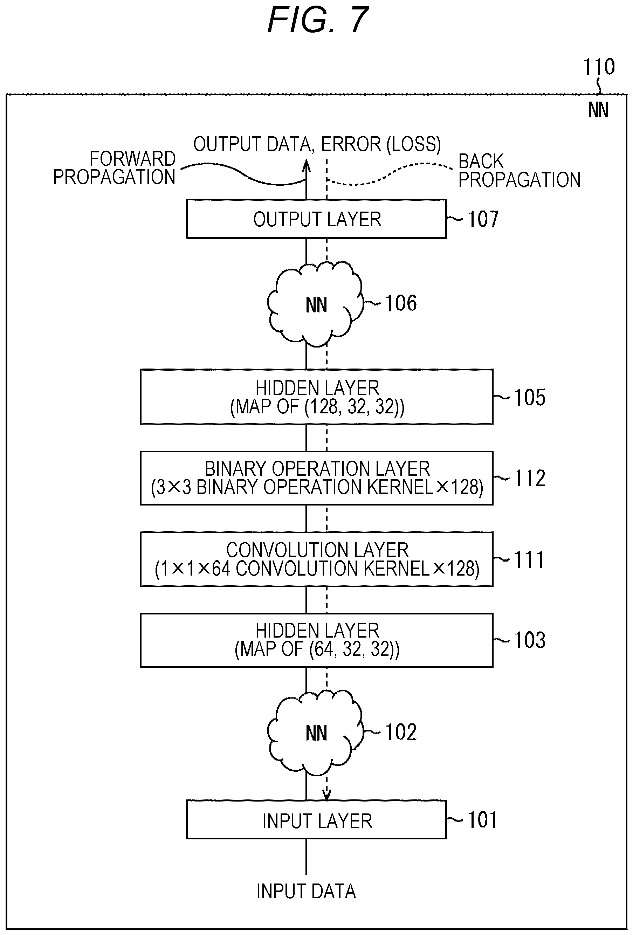

Fig. 7 is a block diagram illustrating a second configuration example of the NN realized by the PC 10.

Note that, in Fig. 7, parts corresponding to those in Fig. 2 are given the same reference numerals, and hereinafter, description thereof will be omitted as appropriate.

In Fig. 7, an NN 110 is an NN including the binary operation layer 112, and includes the input layer 101, the NN 102, the hidden layer 103, the hidden layer 105, the NN 106, the output layer 107, a convolution layer 111, and a binary operation layer 112.

Therefore, the NN 110 is common to the NN 100 in Fig. 2 in including the input layer 101, the NN 102, the hidden layer 103, the hidden layer 105, the NN 106, and the output layer 107.

However, the NN 110 is different from the NN 100 in Fig. 2 in including the convolution layer 111 and the binary operation layer 112, in place of the convolution layer 104.

In the convolution layer 111 and the binary operation layer 112, processing of approximating the $3 \times 3$ convolution, which is performed in the convolution layer 104 in Fig. 2, can be performed as a result.

A map of (64, 32, 32) from the hidden layer 103 is supplied to the convolution layer 111 as layer input data.

The convolution layer 111 applies a convolution kernel to the map of (64, 32, 32) as the layer input data from the hidden layer 103 to perform convolution for the map of (64, 32, 32), similarly to the convolution layer 104 in Fig. 2.

Note that the convolution layer 104 in Fig. 2 performs the $3 \times 3$ convolution using the $3 \times 3$ convolution kernel, whereas the convolution layer 111 performs $1 \times 1$ convolution using, for example, a $1 \times 1$ convolution kernel having a smaller number of filter coefficients than the $3 \times 3$ convolution kernel of the convolution layer 104.

In other words, in the convolution layer 111, a $1 \times 1 \times 64$ convolution kernel is slidingly applied to the map of (64, 32, 32) as the layer input data, whereby the $1 \times 1$ convolution of the map of (64, 32, 32) is performed.

Specifically, in the convolution layer 111, for example, pixels at the same position of all the channels in the map of (64, 32, 32) as the layer input data are sequentially set as pixels (group) of interest, and a rectangular parallelepiped range with $1 \times 1 \times 64$ in height $\times$ width $\times$ channel (the same range as the height $\times$ width $\times$ channel of the convolution kernel) centered on a predetermined position with the pixel of interest as a reference, in other words, for example, the position of the pixel of interest, is set as the object to be processed for convolution, on the map of (64, 32, 32).

Then, a product-sum operation of $1 \times 1 \times 64$ each data (pixel value) in the object to be processed for convolution, of the input map of (64, 32, 32), and a filter coefficient of a filter as the $1 \times 1 \times 64$ convolution kernel is performed, and a result of the product-sum operation is obtained as a result of convolution for the pixel of interest.

Thereafter, in the convolution layer 111, a pixel that has not been set as the pixel of interest is newly set as the pixel of interest, and similar processing is repeated, whereby the convolution kernel is applied to the map as the layer input data while being slid according to the setting of the pixel of interest.

Note that the convolution layer 111 has 128 types of $1 \times 1 \times 64$ convolution kernels, similarly to the convolution layer 104 in Fig. 2, for example, and applies each of the 128 types of $1 \times 1 \times 64$ convolution kernels to the map of (64, 32, 32) to obtain the map of (128, 32, 32) (convolution map), and outputs the convolution map of (128, 32, 32) as the layer output data of the convolution layer 104.

Furthermore, the convolution layer 111 can output, as the layer output data, an operation result of the activation function, the operation result having been calculated using the convolution result obtained by applying the convolution kernel as an argument, similarly to the convolution layer 104.

The binary operation layer 112 sequentially sets pixels at the same position of all the channels of the map of (128, 32, 32) output by the convolution layer 111 as pixels of interest, for example, and sets a rectangular parallelepiped range with $A \times B \times C$ in height $\times$ width $\times$ channel centered on a predetermined position with the pixel of interest as a reference, in other words, for example, the position of the pixel of interest, as an object to be processed for binary operation, on the map of (128, 32, 32).

Here, as the size in height $\times$ width in the rectangular parallelepiped range as the object to be processed for binary operation, for example, the same size as the size in height $\times$ width of the convolution kernel of the convolution layer 104 (the size in height $\times$ width of the object to be processed for binary operation), which is approximated using the binary operation layer 112, in other words, here, $3 \times 3$ can be adopted.

As the size in the channel direction of the rectangular parallelepiped range as the object to be processed for binary operation, the number of channels of the layer input data for the binary operation layer 112, in other words, here, 128 that is the number of channels of the map of (128, 32, 32) output by the convolution layer 111 is adopted.

Therefore, the object to be processed for binary operation for the pixel of interest is, for example, the rectangular parallelepiped range with $3 \times 3 \times 128$ in height $\times$ width $\times$ channel centered on the position of the pixel of interest on the map of (128, 32, 32).

The binary operation layer 112 performs a binary operation using two pieces of data in the objects to be processed set to the pixel of interest, of the map (convolution map) of (128, 32, 32) from the convolution layer 111, and outputs a result of the binary operation to the hidden layer 105 as the upper layer, as the layer output data.

Here, as the binary operation using two pieces of data d1 and d2 in the binary operation layer 112, a sum, a difference, a product, a quotient, or an operation of a predetermined function such as $f(d1, d1) = \sin(d1) \times \cos(d2)$ can be adopted, for example. Moreover, as the binary operation using the two pieces of data d1 and d2, a logical operation such as AND, OR, or XOR of the two pieces of data d1 and d2 can be adopted.

Hereinafter, for the sake of simplify, an operation for obtaining the difference d1 - d2 of the two pieces of data d1 and d2 is adopted, for example, as the binary operation using the two pieces of data d1 and d2 in the binary operation layer 112.

The difference operation for obtaining the difference of the two pieces of data d1 and d2 as the binary operation can be captured as processing for performing a product-sum operation $(+1 \times d1 + (-1) \times d2)$ by applying, to the object to be processed for binary operation, a kernel with $3 \times 3 \times 128$ in height $\times$ width $\times$ channel having the same size as the object to be processed for binary operation, the kernel having only two filter coefficients, in which the filter coefficient to be applied to the data d1 is +1 and the filter coefficient to be applied to the data d2 is -1.

Here, the kernel (filter) used by the binary operation layer 112 to perform the binary operation is also referred to as a binary operation kernel.

The binary operation kernel can be also captured as a kernel with $3 \times 3 \times 128$ in height $\times$ width $\times$ channel having the same size as the object to be processed for binary operation, the kernel having the filter coefficients having the same size as the object to be processed for binary operation, in which the filter coefficients to be applied to the data d1 and d2 are +1 and -1, respectively, and the filter coefficient to be applied to the other data is 0, for example, in addition to being captured as the kernel having the two filter coefficients in which the filter coefficient to be applied to the data d1 is +1 and the filter coefficient to be applied to the data d2 is -1.

As described above, in the case of capturing the binary operation as the application of the binary operation kernel, the 3 × 3 × 128 binary operation kernel is slidingly applied to the map of (128, 32, 32) as the layer input data from the convolution layer 111, in the binary operation layer 112.

In other words, the binary operation layer 112 sequentially sets pixels at the same position of all the channels of the map of (128, 32, 32) output by the convolution layer 111 as pixels of interest, for example, and sets a rectangular parallelepiped range with 3 × 3 × 128 in height × width × channel (the same range as height × width × channel of the binary operation kernel) centered on a predetermined position with the pixel of interest as a reference, in other words, for example, the position of the pixel of interest, as the object to be processed for binary operation, on the map of (128, 32, 32).

Then, a product-sum operation of 3 × 3 × 128 each data (pixel value) in the object to be processed for binary operation, and a filter coefficient of a filter as the 3 × 3 × 128 binary operation kernel, of the input map of (128, 32, 32), is performed, and a result of the product-sum operation is obtained as a result of binary operation for the pixel of interest.

Thereafter, in the binary operation layer 112, a pixel that has not been set as the pixel of interest is newly set as the pixel of interest, and similar processing is repeated, whereby the binary operation kernel is applied to the map as the layer input data while being slid according to the setting of the pixel of interest.

Note that, in Fig. 7, the binary operation layer 112 has 128 types of binary operation kernels, for example, and applies each of the 128 types of binary operation kernels to the map (convolution map) of (128, 32, 32) from the convolution layer 111 to obtain the map of (128, 32, 32), and outputs the map of (128, 32, 32) to the hidden layer 105 as the layer output data of the binary operation layer 112.

Here, the number of channels of the map to be the object for the binary operation and the number of channels of the map obtained as a result of the binary operation are the same 128 channels. However, the number of channels of the map to be the object for the binary operation and the number of channels of the map obtained as a result of the binary operation are not necessarily the same.

For example, by preparing 256 types of binary operation kernels as the binary operation kernels of the binary operation layer 112, for example, the number of channels of the map as the binary operation result obtained by applying the binary operation kernels to the map of (128, 32, 32) from the convolution layer 111 is 256 channels equal to the number of types of the binary operation kernels, in the binary operation layer 112.

Furthermore, in the present embodiment, the difference has been adopted as the binary operation. However, different types of binary operations can be adopted in different types of binary operation kernels.

Furthermore, in the binary operation kernel, between an object to be processed having a certain pixel set as the pixel of interest, and an object to be processed having another pixel set as the pixel of interest, binary values (data) of the same positions can be adopted as objects for binary operations, or binary values of different positions can be adopted as the objects for binary operations, in the objects to be processed.

In other words, as the object to the processed having a certain pixel set as the pixel of interest, binary values of positions P1 and P2 in the object to be processed can be adopted as objects for the binary operation, whereas as the object to be processed having another pixel set as the pixel of interest, binary values of positions P1 and P2 in the object to be processed can be adopted as the objects for binary operation.

Furthermore, as the object to be processed having a certain pixel set as the pixel of interest, the binary values of the positions P1 and P2 in the object to be processed can be adopted as the objects for the binary operation, whereas as the object to be processed having another pixel set as the pixel of interest, binary values of positions P1' and P2' of a pair different from the pair of positions P1 and P2 in the object to be processed can be adopted as the objects for binary operation.

In this case, the binary positions that are to be the objects for the binary operation, of the binary operation kernel to be slidingly applied, change in the object to be processed.

Note that, in the binary operation layer 112, in a case where all the pixels of the map of each channel of the object for the binary operation, in other words, all the pixels of the map of each channel from the convolution layer 111 are set as the pixels of interest, the size in height × width of the map as a result of the binary operation is 32 × 32 (pixels) that is the same as the size in height × width of the map of the object for the binary operation.

Furthermore, in a case where the pixel of the map of each channel for the binary operation is set as the pixel of interest at intervals of one or more pixels, in other words, pixels not set to the pixels of interest exist on the map of each channel for the binary operation, the size in height × width of the map as a result of the binary operation becomes smaller than the size in height × width of the map for the binary operation (pooling is performed).

Furthermore, in the above-described case, as the size in height × width of the binary operation kernel (object to be processed for binary operation), the same size as the size in height × width of the convolution kernel (height × width of the object to be processed for convolution) of the convolution layer 104 (Fig. 2) approximated using the binary operation layer 112, in other words, 3 × 3 has been adopted. However, as the size in height × width of the binary operation kernel (object to be processed for binary operation), a size larger than 1 × 1 or a size larger than the convolution kernel of the convolution layer 111, the size being the same as the map of the object for the binary operation, in other words, a size equal to or smaller than 32 × 32 can be adopted.

Note that, in a case where the same size as the map of the object for the binary operation, in other words, the 32 × 32 size is adopted, as the size in height × width of the binary operation kernel, the binary operation kernel can be adopted to the entire map of the object for the binary operation without being slid. In this case, the map obtained by applying one type of binary operation kernel is configured by one value obtained as a result of the binary operation.

The above processing of the convolution layer 111 and the binary operation layer 112 is processing at the forward propagation for detecting an object and the like, whereas at the back propagation for performing learning, error information regarding an error of the output data, which is to be propagated back to the previous lower layer, is obtained using error information from the subsequent upper layer, and the obtained error information is propagated back to the previous lower layer, in the convolution layer 111 and the binary operation layer 112. Furthermore, in the convolution layer 111, the filter coefficient of the convolution kernel is updated using the error information from the upper layer (here, the binary operation layer 112).

<Processing of Binary Operation Layer 112>

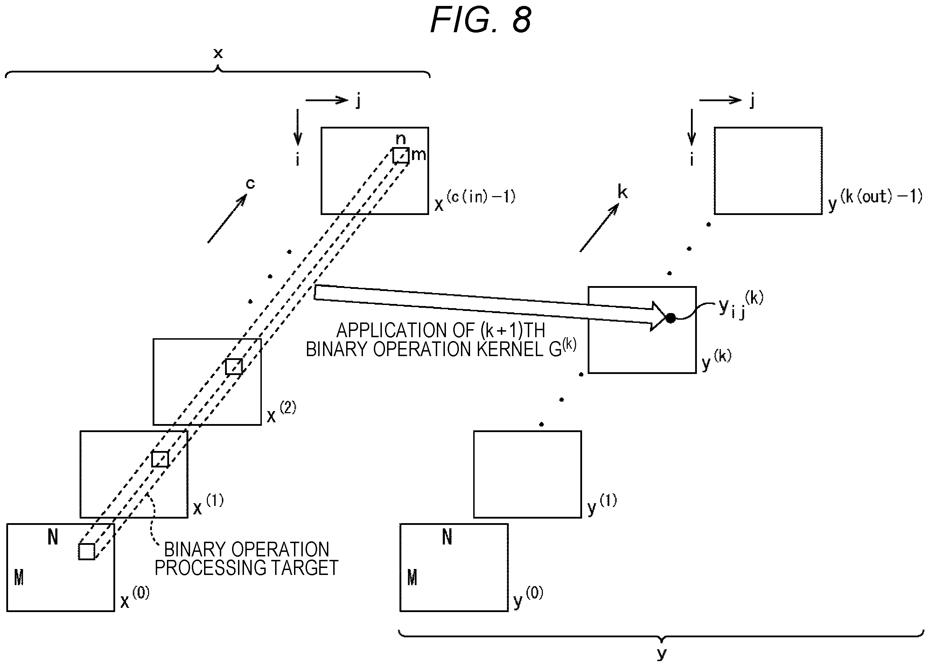

Fig. 8 is a diagram for describing an example of processing of a binary operation of a binary operation layer 112.

In Fig. 8, the map x is the layer input data x to the binary operation layer 112. The map x is the map of (c (in), M, N), in other words, the image of the c (in) channel with M × N in height × width, and is configured by the maps $x^{(0)}$, $x^{(1)}$,..., and $x^{(c(in)-1)}$ of the c (in) channel, similarly to the case in Fig. 3.

Furthermore, in Fig. 8, the map y is the layer output data y output by the binary operation layer 112. The map y is the map of (k (out), M, N), in other words, the image of k (out) channel with M × N in height × width, and is configured by the maps $y^{(0)}$, $y^{(1)}$, ... , and $y^{(k(out)-1)}$ of the k (out) channel, similarly to the case in Fig. 3.

The binary operation layer 112 has k (out) binary operation kernels G with m × n × c (in) in height × width × channel. Here, 1 <= m <= M, 1 <= n <= N, and 1 < m × n <= M × N.

The binary operation layer 112 applies the (k + 1)th binary operation kernel $G^{(k)}$, of the k (out) binary operation kernels G, to the map x to obtain the map $y^{(k)}$ of the channel #k.

In other words, the binary operation layer 112 sequentially sets the pixels at the same position of all the channels of the map x as the pixels of interest, and sets the rectangular parallelepiped range with m × n × c (in) in height × width × channel centered on the position of the pixel of interest, for example, as the object to be processed for binary operation, on the map x.

Then, the binary operation layer 112 applies the (k + 1)th binary operation kernel $G^{(k)}$ to the object to be processed set to the pixel of interest on the map x to perform the difference operation as the binary operation using two pieces of data (binary values) in the object to be processed and obtain the difference between the two pieces of data.

In a case where the object to be processed to which the binary operation kernel $G^{(k)}$ has been applied is an object to be processed in the i-th object in the vertical direction and in the j-th object in the horizontal direction, the difference obtained by applying the binary operation kernel $G^{(k)}$ is the data (pixel value) $y_{ij}^{(k)}$ of the position (i, j) on the map $y^{(k)}$ of the channel #k.

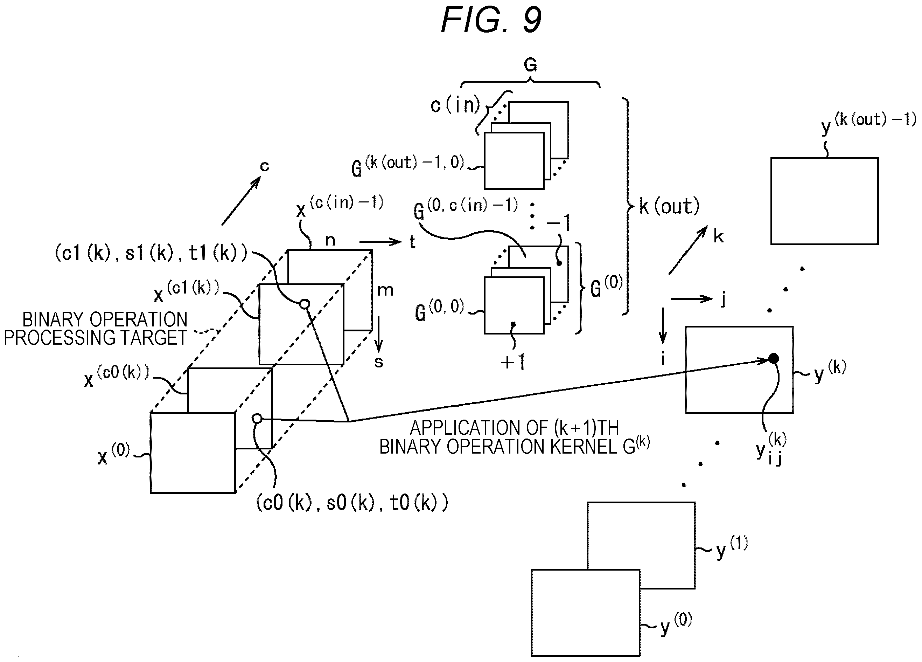

Fig. 9 is a diagram illustrating a state in which the binary operation kernel $G^{(k)}$ is applied to the object to be processed.

As described with reference to Fig. 8, the binary operation layer 112 has k (out) binary operation kernels G with m × n × c (in) in height × width × channel.

Here, the k (out) binary operation kernels G are represented as $G^{(0)}$, $G^{(1)}$ ,..., and $G^{(k(out)-1)}$.

The binary operation kernel $G^{(k)}$ is configured by binary operation kernels $G^{(k,0)}$, $G^{(k,1)}$,..., and $G^{(k,c(in)-1)}$ of the c (in) channel respectively applied to the maps $x^{(0)}$, $x^{(1)}$,..., and $x^{(c(in)-1)}$ of the c (in) channel.

In the binary operation layer 112, the m × n × c (in) binary operation kernel $G^{(k)}$ is slidingly applied to the map x of (c(in), M, N), whereby the difference operation in binary values in the object to be processed with m × n × c (in) in height × width × channel, to which the binary operation kernels $G^{(k)}$ is applied, is performed on the map x, and the map $y^{(k)}$ of the channel #k, which is the difference between the binary values obtained by the difference operation, is generated.

Note that, similarly to the case in Fig. 3, as for the m × n × c (in) binary operation kernel $G^{(k)}$ and the range with m × n in height × width in a spatial direction (directions of i and j) of the map x to which the m × n × c (in) binary operation kernel $G^{(k)}$ is applied, positions in the vertical direction and the horizontal direction, as a predetermined position, with an upper left position of the m × n range as a reference, for example, are represented as s and t, respectively.

Furthermore, in applying the binary operation kernel $G^{(k)}$ to the map x, padding is performed for the map x, and as described in Fig. 3, the number of data padded in the vertical direction from the boundary of the map x is represented by p and the number of data padded in the horizontal direction is represented by q. Padding can be made absent by setting p = q = 0.

Here, as described in Fig. 7, for example, the difference operation for obtaining the difference of the two pieces of data d1 and d2 as the binary operation can be captured as the processing for performing the product-sum operation (+1 × d1 + (-1) × d2) by applying, to the object to be processed for binary operation, the binary operation kernel having only two filter coefficients, in which the filter coefficient to be applied to the data d1 is +1 and the filter coefficient to be applied to the data d2 is -1.

Now, positions in channel direction, height, and width (c, s, t) in the object to be processed of the data d1 with which the filter coefficient +1 of the binary operation kernel $G^{(k)}$ is integrated are represented as (c0(k), s0(k), t0(k)), and positions in channel direction, height, and width (c, s, t) in the object to be processed of the data d2 with which the filter coefficient -1 of the binary operation kernel $G^{(k)}$ is integrated are represented as (c1(k), s1(k), t1(k)).

In the binary operation layer 112, forward propagation for applying the binary operation kernel G to the map x to perform difference operation as binary operation to obtain the map y is expressed by the expression (4).

[Expression 4]

$$y_{ij}^{(k)} = (+1) x_{(i-p+s0(k))(j-q+t0(k))}^{(c0(k))}$$
$$+ (-1) x_{(i-p+s1(k))(j-q+t1(k))}^{(c1(k))}$$

$$\cdots \quad (4)$$

Furthermore, back propagation is expressed by the expression (5).

[Expression 5]

$$\frac{\partial E}{\partial x_{ij}^{(c)}}$$

$$= \sum_{k \in k0(c)} \frac{\partial E}{\partial y_{(i+p-s0(k))(j+q-t0(k))}^{(k)}} \frac{\partial y_{(i+p-s0(k))(j+q-t0(k))}^{(k)}}{\partial x_{ij}^{(c)}}$$

$$+ \sum_{k \in k1(c)} \frac{\partial E}{\partial y_{(i+p-s1(k))(j+q-t1(k))}^{(k)}} \frac{\partial y_{(i+p-s1(k))(j+q-t1(k))}^{(k)}}{\partial x_{ij}^{(k)}}$$

$$= \sum_{k \in k0(c)} \frac{\partial E}{\partial y_{(i+p-s0(k))(j+q-t0(k))}^{(k)}} \times (+1)$$

$$+ \sum_{k \in k1(c)} \frac{\partial E}{\partial y_{(i+p-s1(k))(j+q-t1(k))}^{(k)}} \times (-1)$$

$$\cdots \quad (5)$$

$\partial E/\partial x_{ij}^{(c)}$ in the expression (5) is error information propagated back to the lower layer immediately before the binary operation layer 112, in other words, to the convolution layer 111 in Fig. 7, at the learning of the NN 110.

Here, the layer output data $y_{ij}^{(k)}$ of the binary operation layer 112 is the layer input data $x_{ij}^{(c)}$ of the hidden layer 105 that is the upper layer immediately after the binary operation layer 112.

Therefore, $\partial E/\partial y_{(i+p-s0(k))(j+q-t0(k))}^{(k)}$ on the right side in the expression (5) represents a partial differential in the layer output data $y_{(i+p-s0(k))(j+q-t0(k))}^{(k)}$ of the binary operation layer 112 but is equal to $\partial E/\partial x_{ij}^{(c)}$ obtained in the hidden layer 105 and is error information propagated back to the binary operation layer 112 from the hidden layer 105.

In the binary operation layer 112, the error information $\partial E/\partial x_{ij}^{(c)}$ in the expression (5) is obtained using the error information $\partial E/\partial x_{ij}^{(c)}$ from the hidden layer 105 that is the upper layer, as the error information $\partial E/\partial y_{(i+p-s0(k))(j+q-t0(k))}^{(k)}$.

Furthermore, in the expression (5), k0(c) that defines a range of summarization ($\Sigma$) represents a set of k of the

data $y_{ij}^{(k)}$ of the map $y^{(k)}$ obtained using the data $x_{s0(k)t0(k)}^{(c0(k))}$ of the positions (c0(k), s0(k), t0(k)) in the object to be processed on the map x.

The summarization of the expression (5) is taken for k belonging to k0(c).

This similarly applies to K1(c).

Note that, examples of the layers that configure the NN include a fully connected layer (affine layer) in which units of the layer are connected to all of units in the lower layer, and a locally connected layer (LCL) in which the connection weight can be changed depending on the position where the kernel is applied, for the layer input data.

The LCL is a subset of the fully connected layer, and the convolutional layer is a subset of the LCL. Furthermore, the binary operation layer 112 that performs the difference operation as the binary operation can be regarded as a subset of the convolutional layer.

As described above, in a case where the binary operation layer 112 can be regarded as a subset of the convolution layer, the forward propagation and the back propagation of the binary operation layer 112 can be expressed by the expressions (4) and (5), and can also be expressed by the expressions (1) and (3) that express the forward propagation and the back propagation of the convolution layer.

In other words, the binary operation kernel of the binary operation layer 112 can be captured as the kernel having the filter coefficients having the same size as the object to be processed for binary operation, in which the filter coefficients to be applied to the two pieces of data d1 and d2 are +1 and -1, respectively, and the filter coefficient to be applied to the other data is 0, as described in Fig. 7.

Therefore, the expressions (1) and (3) express the forward propagation and the back propagation of the binary operation layer 112 by setting the filter coefficients $w_{st}^{(k,c)}$ to be applied to the two pieces of data d1 and d2 as +1 and -1, respectively, and the filter coefficient $w_{st}^{(k,c)}$ to be applied to the other data as 0.

Whether the forward propagation and the back propagation of the binary operation layer 112 is realized by either the expressions (1) and (3) or the expressions (4) and (5) can be determined according to the specifications or the like of the hardware and software that realize the binary operation layer 112.

Note that, as described above, the binary operation layer 112 is a subset of the convolutional layer, also a subset of the LCL, and also a subset of the fully connection layer. Therefore, the forward propagation and the back propagation of the binary operation layer 112 can be expressed by the expressions (1) and (3) expressing the forward propagation and the back propagation of the convolution layer, can also be expressed by expressions expressing the forward propagation and the back propagation of the LCL, and can also be expressed by expressions expressing the forward propagation and the back propagation of the fully connected layer.

Furthermore, the expressions (1) to (5) do not include a bias term, but the forward propagation and the back propagation of the binary operation layer 112 can be expressed by expressions including a bias term.

In the NN 110 in Fig. 7, in the convolution layer 111, the $1 \times 1$ convolution is performed, and the binary operation kernel with $m \times n$ in height $\times$ width is applied to the map obtained as a result of the convolution in the binary operation layer 112.

According to the combination of the convolution layer 111 that performs the $1 \times 1$ convolution and the binary operation layer 112 that applies the binary operation kernel with $m \times n$ in height $\times$ width, interaction between channels of the layer input data for the convolution layer 111 is maintained by the $1 \times 1$ convolution, and the information in the spatial direction (i and j directions) of the layer input data for the convolution layer 111 is transmitted to the upper layer (the hidden layer 105 in Fig. 7) in the form of the difference between binary values or the like by the subsequent binary operation.

Then, in the combination of the convolution layer 111 and the binary operation layer 112, the connection weight for which learning is performed is only the filter coefficient $W_{00}^{(k,c)}$ of the convolution kernel F used for the $1 \times 1$ convolution. However, the connection of the layer input data of the convolution layer 111 and the layer output data of the binary operation layer 112 has a configuration to approximate connection between the layer input data of the convolution layer that performs convolution with spread of $m \times n$ similar to the size in height $\times$ width of the binary operation kernel, and the layer output data.

As a result, according to the combination of the convolution layer 111 and the binary operation layer 112, convolution that covers the range of $m \times n$ in height $\times$ width as viewed from the upper layer side of the binary operation layer 112, in other words, convolution with similar performance to the $m \times n$ convolution can be performed with the reduced number of filter coefficients $W_{00}^{(k,c)}$ of the convolution kernel F as the number of parameters and the reduced calculation amount to $1/(m \times n)$.

Note that, in the convolution layer 111, not only the $1 \times 1$ convolution kernel but also $m' \times n'$ convolution can be performed with an $m' \times n'$ kernel having the size in the spatial direction of the binary operation kernel, in other words, a size in height $\times$ width smaller than $m \times n$. Here, $m' <= m$, $n' <= n$, and $m' \times n' < m \times n$.

In a case where the $m' \times n'$ convolution is performed in the convolution layer 111, the number of filter coefficients $W_{00}^{(k,c)}$ of the convolution kernel F as the number of parameters and the calculation amount become $(m' \times n')/(m \times n)$ of those of the $m \times n$ convolution.

Furthermore, the convolution performed in the convolution layer 111 can be divided into a plurality of layers. By dividing the convolution performed in the convolution layer 111 into a plurality of layers, the number of filter coefficients $w_{00}^{(k,c)}$ of the convolution kernel F and the calculation amount can be reduced.

In other words, for example, in a case of performing the $1 \times 1$ convolution for a map of 64 channels to generate a map of 128 channels in the convolution layer 111, the $1 \times 1$ convolution of the convolution layer 111 can be divided into, for example, a first convolution layer for performing the $1 \times 1$ convolution for the map of 64 channels to generate a map of 16 channels, and a second convolution layer for performing the $1 \times 1$ convolution for the map of 16 channels to generate the map of 128 channels.

In the convolution layer 111, in the case of performing the $1 \times 1$ convolution for the map of 64 channels to generate the map of 128 channels, the number of filter coefficients of the convolution kernel is $64 \times 128$.

Meanwhile, the number of filter coefficients of the convolution kernel of the first convolutional layer that performs the $1 \times 1$ convolution for the map of 64 channels to generate the map of 16 channels is $64 \times 16$, and the number of filter coefficients of the convolution kernel of the second convolutional layer that performs the $1 \times 1$ convolution for the map of 16 channels to generate the map of 128 channels is $16 \times 128$.

Therefore, the number of filter coefficients can be reduced from $64 \times 128$ to $64 \times 16 + 16 \times 128$ by adopting the first and second convolution layers instead of the convolution layer 111. This similarly applies to the calculation amount.

<Method of Selecting Binary Values to be Objects for Binary Operation of Binary Operation Layer 112>

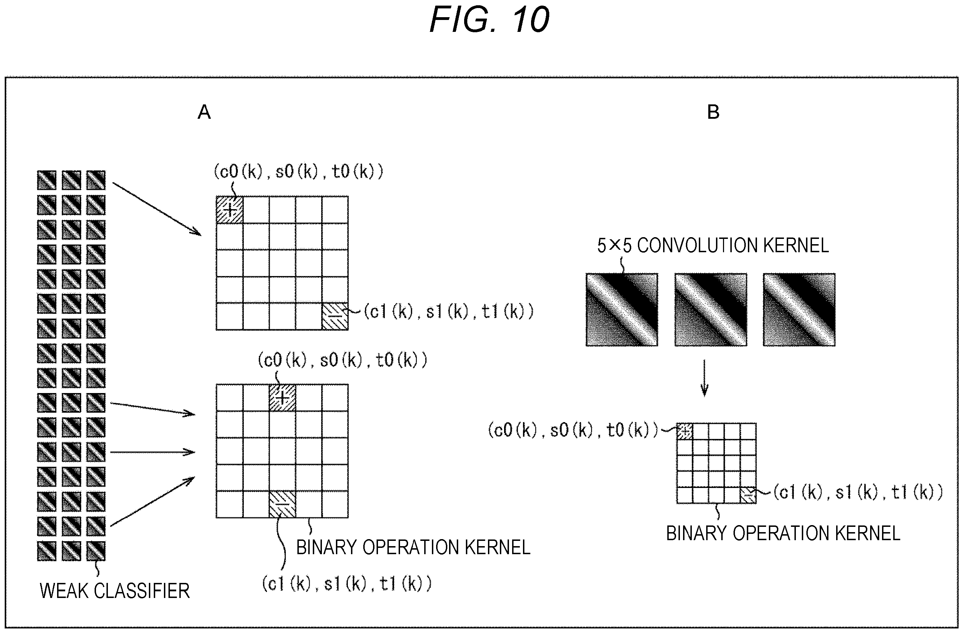

Fig. 10 is a diagram illustrating an example of a selection method for selecting binary values to be objects for binary operation of the binary operation layer 112.

Binary positions (c0(k), s0(k), t0(k)) and (c1(k), s1(k), t1(k)) (Fig. 9) to be objects for binary operation can be randomly selected, for example, from the rectangular parallelepiped range with $m \times n \times c$ (in) in height $\times$ width $\times$ channel centered on the position of the pixel of interest on the map x, which is the object to be processed for binary operation.

In other words, the binary positions (c0(k), s0(k), t0(k)) and (c1(k), s1(k), t1(k)) to be objects for binary operation can be randomly selected by a random projection method or another arbitrary method.

Moreover, in selecting the binary positions (c0(k), s0(k), t0(k)) and (c1(k), s1(k), t1(k)) to be objects for binary operation, a predetermined constraint can be imposed.

In the case of randomly selecting the binary positions (c0(k), s0(k), t0(k)) and (c1(k), s1(k), t1(k)), a map $x^{(c)}$ of the channel #c not connected with the map y as the layer output data of the binary operation layer 112, in other words, a map $x^{(c)}$ not used for the binary operation may occur, in the map x as the layer input data of the binary operation layer 112.

Therefore, in selecting the binary positions (c0(k), s0(k), t0(k)) and (c1(k), s1(k), t1(k)) to be objects for binary operation, a constraint to connect the map $x^{(c)}$ of each channel #c with the map $y^{(k)}$ of one or more channels, in other words, a constraint to select one or more positions (c, s, t) to be the positions (c0(k), s0(k), t0(k)) or (c1(k), s1(k), t1(k)) from the map $x^{(c)}$ of each channel #c can be imposed in the binary operation layer 112 so that no map $x^{(c)}$ not used for the binary operation occurs.

Note that, in the binary operation layer 112, in a case where the map $x^{(c)}$ not used for the binary operation has occurred, post processing of deleting the map $x^{(c)}$ not used for the binary operation can be performed in the lower layer immediately before the binary operation layer 112, for example, in place of imposing the constraint to connect the map $x^{(c)}$ of each channel #c with the map $y^{(k)}$ of one or more channels.

As described in Fig. 9, in the combination of the convolution layer 111 that performs $m' \times n'$ ($< m \times n$) convolution and the binary operation layer 112 that performs the binary operation for the range with $m \times n \times c$ (in) in height $\times$ width $\times$ channel direction on the map x, the $m \times n$ convolution can be approximated. Therefore, the spread in the spatial direction of $m \times n$ in height $\times$ width of the object to be processed for binary operation corresponds to the spread in the spatial direction of the convolution kernel for performing the $m \times n$ convolution, and hence the spread in the spatial direction of the map x to be the object for the $m \times n$ convolution.

In a case of performing convolution for a wide range in the spatial direction of the map x, a low frequency component of the map x can be extracted, and in a case of performing convolution for a narrow range in the spatial direction of the map x, a high frequency component of the map x can be extracted.

Therefore, in selecting the binary positions (c0(k), s0(k), t0(k)) and (c1(k), s1(k), t1(k)) to be objects for binary operation, the range in the spatial direction when selecting the binary positions (c0(k), s0(k), t0(k)) and (c1(k), s1(k), t1(k)) from the $m \times n \times c$ (in) object to be processed can be changed by the channel #k of the map $y^{(k)}$ as the layer output data in a range of $m \times n$ as the maximum range so that various frequency components can be extracted from the map x.

For example, in a case where $m \times n$ is $9 \times 9$, the binary positions (c0(k), s0(k), t0(k)) and (c1(k), s1(k), t1(k)) can be selected from the entire $9 \times 9 \times c$ (in) object to be processed, for 1/3 of the channels of the map $y^{(k)}$.

Moreover, for example, the binary positions (c0(k), s0(k), t0(k)) and (c1(k), s1(k), t1(k)) can be selected from a narrow range with $5 \times 5$ in the spatial direction centered on the pixel of interest, of the $9 \times 9 \times c$ (in) object to be processed, for another 1/3 of the channels of the map $y^{(k)}$.

Then, for example, the binary positions $(c0(k), s0(k), t0(k))$ and $(c1(k), s1(k), t1(k))$ can be selected from a narrower range with $3 \times 3$ in the spatial direction centered on the pixel of interest, of the $9 \times 9 \times c$ (in) object to be processed, for the remaining 1/3 of the channels of the map $y^{(k)}$.

As described above, by changing the range in the spatial direction of when selecting the binary positions $(c0(k), s0(k), t0(k))$ and $(c1(k), s1(k), t1(k))$ from the $m \times n \times c$ (in) object to be processed of the map x according to the channel #k of the map $y^{(k)}$, various frequency components can be extracted from the map x.

Note that changing the range in the spatial direction of when selecting the binary positions $(c0(k), s0(k), t0(k))$ and $(c1(k), s1(k), t1(k))$ from the $m \times n \times c$ (in) object to be processed of the map x according to the channel #k of the map $y^{(k)}$, as described above, is equivalent to application of the binary operation kernels having different sizes in the spatial direction between the case of obtaining the map $y^{(k)}$ as the layer output data of one channel #k and the case of obtaining the map $y^{(k)}$ as the layer output data of another one channel #k'.

Furthermore, in the binary operation layer 112, binary operation kernels $G^{(k,c)}$ having different sizes in the spatial direction can be adopted according to the channel #C of the map $x^{(c)}$.

In selecting the binary positions $(c0(k), s0(k), t0(k))$ and $(c1(k), s1(k), t1(k))$ from the $m \times n \times c$ (in) object to be processed of the map x, patterns of the binary positions $(c0(k), s0(k), t0(k))$ and $(c1(k), s1(k), t1(k))$ selected from the object to be processed can be adjusted according to orientation of the map x.

For example, an image in which a human face appears has many horizontal edges, and orientation corresponding to such horizontal edges frequently appears. Therefore, in a case of detecting whether a human face appears in an image as input data, the patterns of the binary positions $(c0(k), s0(k), t0(k))$ and $(c1(k), s1(k), t1(k))$ selected from the object to be processed can be adjusted so that a binary operation to increase the sensitivity to the horizontal edges is performed according to the orientation corresponding to the horizontal edges.

For example, in a case of performing the difference operation as the binary operation using the binary positions $(c0(k), s0(k), t0(k))$ and $(c1(k), s1(k), t1(k))$ having different vertical positions on the map x, when there is a horizontal edge at the position $(c0(k), s0(k), t0(k))$ or the position $(c1(k), s1(k), t1(k))$, the magnitude of the difference obtained by the difference operation becomes large and the sensitivity to the horizontal edge is increased. In this case, the detection performance of when detecting whether or not the face of a person with many horizontal edges appears can be improved.

In selecting the binary positions $(c0(k), s0(k), t0(k))$ and $(c1(k), s1(k), t1(k))$ from the $m \times n \times c$ (in) object to be processed of the map x, a constraint to uniform the patterns of the binary positions $(c0(k), s0(k), t0(k))$ and $(c1(k), s1(k), t1(k))$ selected from the object to be processed, in other words, a constraint to cause various patterns to uniformly appear as the patterns of the binary positions $(c0(k), s0(k), t0(k))$ and $(c1(k), s1(k), t1(k))$ can be imposed.

Furthermore, a constraint to uniformly vary the frequency components and the orientation obtained from the binary values selected from the object to be processed can be imposed for the patterns of the binary positions $(c0(k), s0(k), t0(k))$ and $(c1(k), s1(k), t1(k))$ selected from the object to be processed.

Furthermore, ignoring the channel direction of the object to be processed and focusing on the spatial direction, for example, in a case where the size in the spatial direction of the object to be processed is $m \times n = 9 \times 9$, for example, the frequency of selection of the binary positions $(c0(k), s0(k), t0(k))$ and $(c1(k), s1(k), t1(k))$ from the object to be processed becomes higher in a region around the object to be processed (a region other than a $3 \times 3$ region in a center of the object to be processed) than in the $3 \times 3$ region, for example, in the center of the object to be processed. This is because the region around the object to be processed is wider than the $3 \times 3$ region in the center of the object to be processed.

The binary positions $(c0(k), s0(k), t0(k))$ and $(c1(k), s1(k), t1(k))$ may be better to be selected from the $3 \times 3$ region in the center of the object to be processed or may be better to be selected from the region around the object to be processed.

Therefore, a constraint to uniformly vary the distance in the spatial direction from the pixel of interest to the position $(c0(k), s0(k), t0(k))$ or the distance in the spatial direction from the pixel of interest to the position $(c1(k), s1(k), t1(k))$ can be imposed for the selection of the binary positions $(c0(k), s0(k), t0(k))$ and $(c1(k), s1(k), t1(k))$ from the object to be processed.

Furthermore, a constraint (bias) to cause the distance in the spatial direction from the pixel of interest to the position $(c0(k), s0(k), t0(k))$ or the distance in the spatial direction from the pixel of interest to the position $(c1(k), s1(k), t1(k))$ not to be a close distance (distance equal to or smaller than a threshold value) can be imposed as necessary, for example, for the selection of the binary positions $(c0(k), s0(k), t0(k))$ and $(c1(k), s1(k), t1(k))$ from the object to be processed.

Moreover, a constraint to cause the binary positions $(c0(k), s0(k), t0(k))$ and $(c1(k), s1(k), t1(k))$ to be selected from a circular range in the spatial direction of the object to be processed can be imposed for the selection of the binary values $(c0(k), s0(k), t0(k))$ and $(c1(k), s1(k), t1(k))$ from the object to be processed. In this case, processing corresponding to processing performed with a circular filter (filter with a filter coefficient to be applied to the circular range) can be performed.

Note that when the same set is selected in the binary operation kernel $G^{(k)}$ of a certain channel #k and in the binary operation kernel $G^{(k')}$ of another channel #k in a case of randomly selecting a set of the binary positions $(c0(k), s0(k), t0(k))$ and $(c1(k), s1(k), t1(k))$, a set of the binary positions $(c0(k), s0(k), t0(k))$ and $(c1(k), s1(k), t1(k))$ can be reselected in one of the binary operation kernels $G^{(k)}$ and $G^{(k')}$.

Furthermore, the selection of a set of the binary positions $(c0(k), s0(k), t0(k))$ and $(c1(k), s1(k), t1(k))$ can be performed using a learning-based method, in addition to being randomly performed.

Fig. 10 illustrates an example of selection of a set of the binary positions $(c0(k), s0(k), t0(k))$ and $(c1(k), s1(k), t1(k))$, which is performed using the learning-based method.

A in Fig. 10 illustrates a method of selecting the binary positions $(c0(k), s0(k), t0(k))$ and $(c1(k), s1(k), t1(k))$ for which the binary operation is to be performed with the binary operation kernel, using learning results of a plurality of weak classifiers for obtaining differences in pixel values between respective two pixels of an image, which is described in Patent Document 1.

With respect to the weak classifier described in Patent Document 1, the positions of the two pixels for which the difference is obtained in the weak classifier are learned.

As the binary positions $(c0(k), s0(k), t0(k))$ and $(c1(k), s1(k), t1(k))$, for example, the position of the pixel to be a minuend and the position of the pixel to be a subtrahend, of the two pixels for which the difference is obtained in the weak classifier, can be respectively adopted.

Furthermore, in a case of providing a plurality of the binary operation layers 112, the learning of the positions of the two pixels for which the difference is obtained in the weak classifier described in Patent Document 1 is sequentially repeatedly performed, and a plurality of sets of the positions of the two pixels for which the difference is obtained in the weak classifier obtained as a result of the learning can be adopted as the sets of the binary positions $(c0(k), s0(k), t0(k))$ and $(c1(k), s1(k), t1(k))$ for the plurality of binary operation layers 112.

B in Fig. 10 illustrates a method of selecting the binary positions $(c0(k), s0(k), t0(k))$ and $(c1(k), s1(k), t1(k))$ for which the binary operation is to be performed with the binary operation kernel, using a learning result of the CNN.

In B in Fig. 10, the binary positions $(c0(k), s0(k), t0(k))$ and $(c1(k), s1(k), t1(k))$ for which the binary operation is to be performed with the binary operation kernel are selected on the basis of the filter coefficients of the convolution kernel F of the convolution layer obtained as a result of the learning of the CNN having the convolution layer that performs convolution with a size larger than $1 \times 1$ in height $\times$ width.

For example, positions of the maximum value and the minimum value of the filter coefficients of the convolution kernel F can be respectively selected as the binary positions $(c0(k), s0(k), t0(k))$ and $(c1(k), s1(k), t1(k))$.

Furthermore, for example, assuming that the distribution of the filter coefficients of the convolution kernel F is a probability distribution, two positions in the descending order of probability in the probability distribution can be selected as the binary positions $(c0(k), s0(k), t0(k))$ and $(c1(k), s1(k), t1(k))$.

<Processing of Convolution Layer 111 and Binary Operation Layer 112>

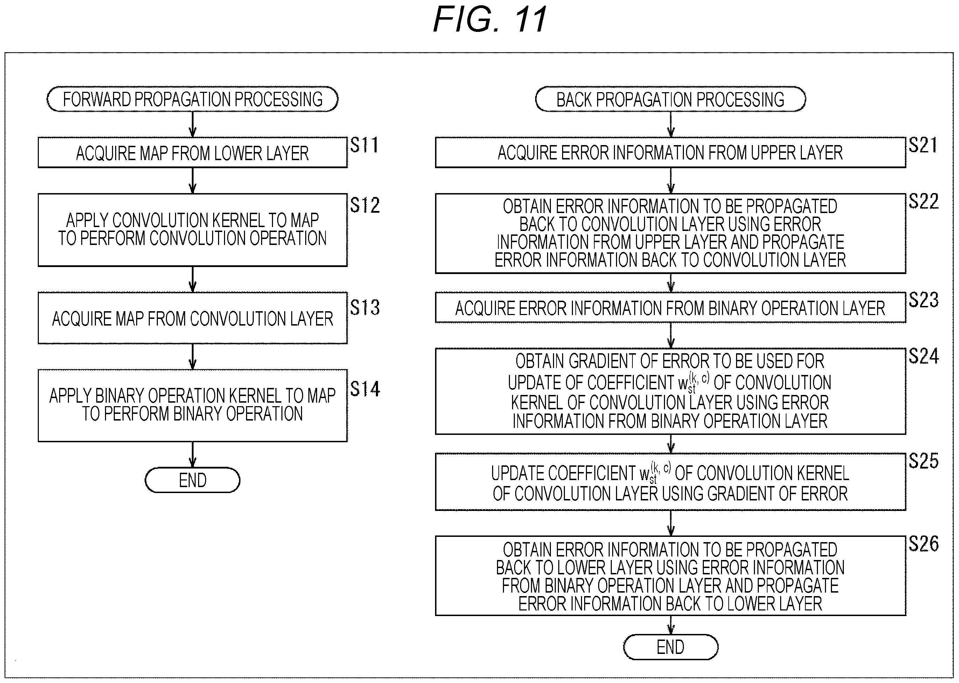

Fig. 11 is a flowchart illustrating an example of processing during forward propagation and back propagation of the convolution layer 111 and the binary operation layer 112 of the NN 110 in Fig. 7.

In the forward propagation, in step S11, the convolution layer 111 acquires the map x as the layer input data for the convolution layer 111 from the hidden layer 103 as the lower layer, and the processing proceeds to step S12.

In step S12, the convolution layer 111 applies the convolution kernel F to the map x to perform the $1 \times 1$ convolution to obtain the map y as the layer output data of the convolution layer 111, and the processing proceeds to step S13.

Here, the convolution processing in step S12 is expressed by the expression (1).

In step S13, the binary operation layer 112 acquires the layer output data of the convolution layer 111 as the map x as the layer input data for the binary operation layer 112, and the processing proceeds to step S14.

In step S14, the binary operation layer 112 applies the binary operation kernel G to the map x from the convolution layer 111 to perform the binary operation to obtain the map y as the layer output data of the binary operation layer 112. The processing of the forward propagation of the convolution layer 111 and the binary operation layer 112 is terminated.

Here, the binary operation in step S14 is expressed by, for example, the expression (4).

In the back propagation, in step S21, the binary operation layer 112 acquires $\partial E/\partial y_{(i+p-s0(k))(j+q-t0(k))}^{(k)}$ on the right side in the expression (5) as the error information from the hidden layer 105 that is the upper layer, and the processing proceeds to step S22.

In step S22, the binary operation layer 112 obtains $\partial E/\partial x_{ij}^{(c)}$ of the expression (5) as the error information to be propagated back to the convolution layer 111 that is the lower layer, using $\partial E/\partial y_{(i+p-s0(k))(j+q-t0(k))}^{(k)}$ on the right side in the expression (5) as the error information from the hidden layer 105 as the upper layer. Then, the binary operation layer 112 propagates $\partial E/\partial x_{ij}^{(c)}$ of the expression (5) as the error information back to the convolution layer 111 as the lower layer, and the processing proceeds from step S22 to step S23.

In step S23, the convolution layer 111 obtains $\partial E/\partial x_{ij}^{(c)}$ of the expression (5) as the error information from the binary operation layer 112 that is the upper layer, and the processing proceeds to step S24.

In step S24, the convolution layer 111 obtains the gradient $\partial E/\partial w_{st}^{(k,c)}$ of the error of the expression (2), using $\partial E/\partial x_{ij}^{(c)}$ of the expression (5) as the error information from the binary operation layer 112, as the error information $\partial E/\partial y_{ij}^{(k)}$ on the right side in the expression (2), and the processing proceeds to step S25.

In step S25, the convolution layer 111 updates the filter coefficient $w_{00}^{(k,c)}$ of the convolution kernel $F^{(k,c)}$ for performing the $1 \times 1$ convolution, using the gradient $\partial E/\partial w_{st}^{(k,c)}$ of the error, and the processing proceeds to step S26.

In step S26, the convolution layer 111 obtains $\partial E/\partial x_{ij}^{(c)}$ of the expression (3) as the error information to be propagated back to the hidden layer 103 that is the lower layer, using $\partial E/\partial x_{ij}^{(c)}$ of the expression (5) as the error information from the binary operation layer 112, as the error information $\partial E/\partial y_{ij}^{(k)}$ $(\partial E/\partial y_{(i+p-s)(j+q-t)}^{(k)})$ on the right side in the expression (3).

Then, the convolution layer 111 propagates $\partial E/\partial x_{ij}^{(c)}$ of the expression (3) as the error information back to the hidden layer 103 that is the lower layer, and the processing of the back propagation of the convolution layer 111 and the binary operation layer 112 is terminated.

Note that the convolution layer 111, the binary operation layer 112, the NN 110 (Fig. 7) including the convolution layer 111 and the binary operation layer 112, and the like can be provided in the form of software including a library and the like or in the form of dedicated hardware.

Furthermore, the convolution layer 111 and the binary operation layer 112 can be provided in the form of a function included in the library, for example, and can be used by calling the function as the convolution layer 111 and the binary operation layer 112 in an arbitrary program.

Moreover, operations in the convolution layer 111, the binary operation layer 112, and the like can be performed with one bit, two bits, or three or more bits of precision.

Furthermore, as the type of values used in the operations in the convolution layer 111, the binary operation layer 112, and the like, floating point type, fixed point type, integer type, or any type of other numerical values can be adopted.

<Simulation Result>

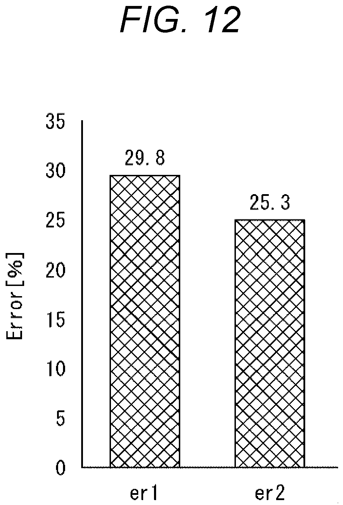

Fig. 12 is a diagram illustrating a simulation result of a simulation performed for a binary operation layer.

In the simulation, two NNs were prepared, and learning of the two NNs was performed using an open image data set.

One of the two NNs is an CNN having five convolution layers in total including a convolution layer that performs $5 \times 5 \times 32$ (height $\times$ width $\times$ channel) convolution, another convolution layer that performs $5 \times 5 \times 32$ convolution, a convolution layer that performs $5 \times 5 \times 64$ convolution, another convolution layer that performs $5 \times 5 \times 64$ convolution, and a convolution layer that performs $3 \times 3 \times 128$ convolution. A rectified linear function was adopted as the activation function of each convolutional layer.

Furthermore, the other NN is an NN (hereinafter also referred to as substitute NN) obtained by replacing the five convolution layers of the CNN that is the one NN with the convolution layer 111 that performs $1 \times 1$ convolution and the binary operation layer 112 that obtains a difference between binary values.

In the simulation, images are given to the CNN and the substitute NN after learning, the images are recognized, and error rates are calculated.

Fig. 12 illustrates an error rate er1 of the CNN and an error rate er2 of the substitute NN as simulation results.

According to the simulation results, it has been confirmed that the substitute NN improves the error rate.

Therefore, it can be inferred that, in the substitute NN, connection of (corresponding units of) neurons equal to or more than the convolutional layer of the CNN is realized with fewer parameters than the CNN.

<Another Configuration Example of NN Including Binary Operation Layer>

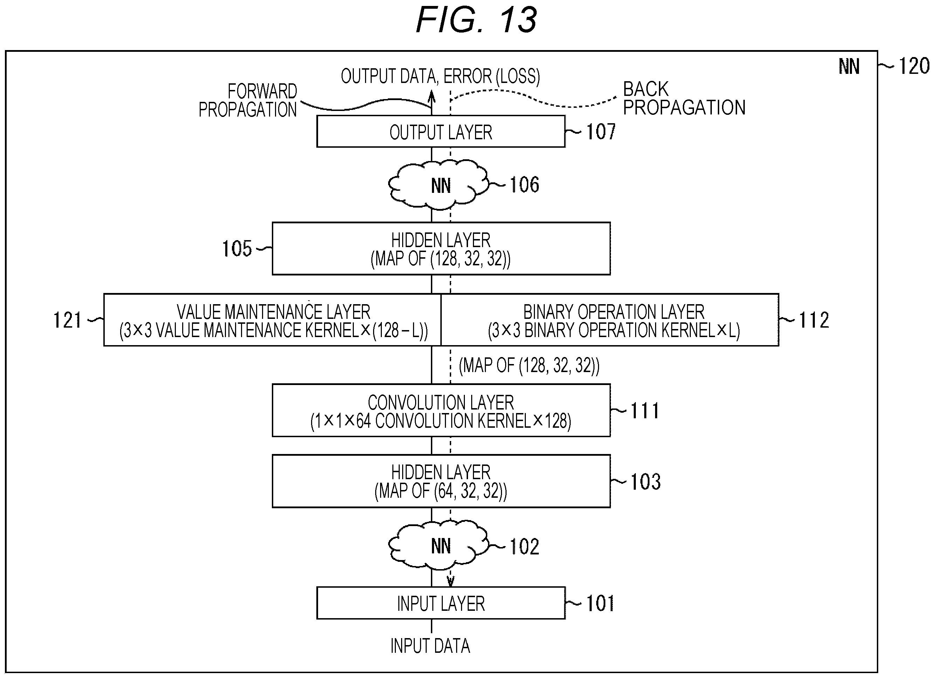

Fig. 13 is a block diagram illustrating a third configuration example of the NN realized by the PC 10.

Note that, in Fig. 13, parts corresponding to those in Fig. 7 are given the same reference numerals, and hereinafter, description thereof will be omitted as appropriate.

In Fig. 13, an NN 120 is an NN including the binary operation layer 112 and the value maintenance layer 121, and includes the input layer 101, the NN 102, the hidden layer 103, the hidden layer 105, the NN 106, the output layer 107, the convolution layer 111, the binary operation layer 112, and the value maintenance layer 121.

Therefore, the NN 120 is common to the NN 110 in Fig. 7 in including the input layer 101, the NN 102, the hidden layer 103, the hidden layer 105, the NN 106, the output layer 107, the convolution layer 111, and the binary operation layer 112.

However, the NN 120 is different from the NN 110 in Fig. 7 in newly including the value maintenance layer 121.

In Fig. 13, the value maintenance layer 121 is arranged in parallel with the binary operation layer 112 as an upper layer immediately after the convolution layer 111.

The value maintenance layer 121 maintains, for example, absolute values of a part of data configuring the map of (128, 32, 32) output as the layer output data by the convolution layer 111 that is the previous lower layer, and outputs the data to the hidden layer 105 that is the subsequent upper layer.

In other words, the value maintenance layer 121 sequentially sets pixels at the same position of all the channels of the map of (128, 32, 32) output by applying 128 types of $1 \times 1 \times 64$ convolution kernels by the convolution layer 111, for example, as pixels of interest, and sets a rectangular parallelepiped range with $A \times B \times C$ in height $\times$ width $\times$ channel centered on a predetermined position with the pixel of interest as a reference, in other words, for example, the position of the pixel of interest, as an object to be processed for value maintenance for maintaining an absolute value, on the map of (128, 32, 32).

Here, as the size in height $\times$ width in the rectangular parallelepiped range as the object to be processed for value maintenance, for example, the same size as the size in height $\times$ width of the binary operation kernel G of the binary operation layer 112, in other words, $3 \times 3$ can be adopted. Note that, as the size in height $\times$ width in the rectangular parallelepiped range as the object to be processed for value maintenance, a size different from the size in height $\times$ width of the binary operation kernel G can be adopted.

As the size in the channel direction of the rectangular parallelepiped range as the object to be processed for value maintenance, the number of channels of the layer input data for the value maintenance layer 121, in other words, here, 128 that is the number of channels of the map of (128, 32, 32) output by the convolution layer 111 is adopted.

Therefore, the object to be processed for value maintenance for the pixel of interest is, for example, the rectangular parallelepiped range with $3 \times 3 \times 128$ in height $\times$ width $\times$ channel centered on the position of the pixel of interest on the map of (128, 32, 32).

The value maintenance layer 121 selects one piece of data in the object to be processed set for the pixel of interest, of the map of (128, 32, 32) from the convolution layer 111, by random projection or the like, for example, maintains the absolute value of the data, and outputs the value to the hidden layer 105 as the upper layer, as the layer output data.

Here, maintaining the absolute value of the data includes a case of applying subtraction, addition, integration, division, or the like of a fixed value to the value of the data, and a case of performing an operation reflecting information of the absolute value of the data, as well as maintaining the value of the data as it is.

In the binary operation layer 112, for example, the difference operation in values of two pieces of data in the object to be processed for binary operation is performed. Therefore, information of the difference between values of the two pieces of data is propagated to the subsequent layer, but information of the absolute value of the data is not propagated.

In contrast, in the value maintenance layer 121, the absolute value of one piece of data in the object to be processed for value maintenance is maintained and output. Therefore, the information of the absolute value of the data is propagated to the subsequent layer.

According to the simulation conducted by the inventor of the present invention, the information of the absolute value of the data is propagated to the subsequent layer in addition to the information of the difference between the values of the two pieces of data, and thus improvement of the performance of the NN (detection performance for detecting the object and the like) can be confirmed.

The value maintenance processing for maintaining and outputting the absolute value of one piece of data in the object to be processed for value maintenance by the value maintenance layer 121 can be captured as processing for applying a kernel with $3 \times 3 \times 128$ in height $\times$ width $\times$ channel, the kernel having the same size as the object to be processed for value maintenance and having only one filter coefficient in which the filter coefficient to be applied to one piece of data d1 is +1, to the object to be processed for value maintenance to obtain a product (+1 $\times$ d1), for example.

Here, the kernel (filter) used by the value maintenance layer 121 to perform the value maintenance is also referred to as a value maintenance kernel.

The value maintenance kernel can be also captured as a kernel with $3 \times 3 \times 128$ in height $\times$ width $\times$ channel having the same size as the object to be processed for value maintenance, the kernel having filter coefficients having the same size as the object to be processed for value maintenance, in which the filter coefficient to be applied to the data d1 is +1 and the filter coefficient to be applied to the other data is 0, for example, in addition to being captured as the kernel having one filter coefficient in which the filter coefficient to be applied to the data d1 is +1, as described above.

As described above, in the case of capturing the value maintenance processing as the application of the value maintenance kernel, the $3 \times 3 \times 128$ value maintenance kernel is slidingly applied to the map of (128, 32, 32) as the layer input data from the convolution layer 111, in the value maintenance layer 121.

In other words, for example, the value maintenance layer 121 sequentially sets pixels at the same position of all the channels of the map of (128, 32, 32) output by the convolution layer 111 as pixels of interest, and sets a rectangular parallelepiped range with 3 × 3 × 128 in height × width × channel (the same range as height × width × channel of the value maintenance kernel) centered on a predetermined position with the pixel of interest as a reference, in other words, for example, the position of the pixel of interest, as the object to be processed for value maintenance, on the map of (128, 32, 32).

Then, a product operation or a product-sum operation of 3 × 3 × 128 each data (pixel value) in the object to be processed for value maintenance, and a filter coefficient of a filter as the 3 × 3 × 128 value maintenance kernel, of the map of (128, 32, 32), is performed, and a result of the product operation or the product-sum operation is obtained as a result of value maintenance for the pixel of interest.

Thereafter, in the value maintenance layer 121, a pixel that has not been set as the pixel of interest is newly set as the pixel of interest, and similar processing is repeated, whereby the value maintenance kernel is applied to the map as the layer input data while being slid according to the setting of the pixel of interest.

Note that, as illustrated in Fig. 13, in a case where the binary residual layer 112 and the value maintenance increase 121 are arranged in parallel, as the number (number of types) of the binary operation kernels G held by the binary operation layer 112 and the number of value maintenance kernels held by the value maintenance layer 121, the number of the binary operation kernels G and the number of value maintenance kernels are adopted such that an addition value of the aforementioned numbers becomes equal to the number of channels of the map accepted by the hidden layer 105 that is the subsequent upper layer as the layer input data.

For example, in a case where the hidden layer 105 accepts the map of (128, 32, 32) as the layer input data, and the number of binary operation kernels G held in the binary operation layer 112 is L types from 1 to 128, exclusive of 128, the value maintenance layer 121 has (128 - L) types of value maintenance kernels.

In this case, the map of (128 - L) channels obtained by application of the (128 - L) types of value maintenance kernels of the value maintenance layer 121 is output to the hidden layer 105 as a map (the layer input data to the hidden layer 105) of a part of the channels of the map of (128, 32, 32) accepted by the hidden layer 105. Furthermore, the map of the L channels obtained by application of the L types of binary operation kernels G of the binary operation layer 112 is output to the hidden layer 105 as a map of remaining channels of the map of (128, 32, 32) accepted by the hidden layer 105.

Here, the binary residual layer 112 and the value maintenance layer 121 can output maps of the same size in height × width.

Furthermore, in the value maintenance kernel, between an object to be processed having a certain pixel set as the pixel of interest, and an object to be processed having another pixel set as the pixel of interest, a value (data) of the same position can be adopted as objects for value maintenance, or values of different positions can be adopted as the objects for the value maintenance, in the objects to be processed.

In other words, as the object to the processed having a certain pixel set as the pixel of interest, a value of a position P1 in the object to be processed can be adopted as the object for the value maintenance, whereas as the object to be processed having another pixel set as the pixel of interest, a value of a position P1 in the object to be processed can be adopted as the object for the value maintenance.

Furthermore, as the object to the processed having a certain pixel set as the pixel of interest, the value of the position P1 in the object to be processed can be adopted as the object for the value maintenance, whereas as the object to be processed having another pixel set as the pixel of interest, a value of a position P2 different from the position P1 in the object to be processed can be adopted as the object for the value maintenance.

In this case, the position of the value that is to be the object for value maintenance in the value maintenance kernel to be slidingly applied changes in the object to be processed.

Note that, in the binary operation layer 112, the range in which the binary operation kernel G is applied on the map output by the convolution layer 111 becomes the object to be processed for binary operation, and in the value maintenance layer 121, the range in which the value maintenance kernel is applied on the map output by the convolution layer 111 becomes the object to be processed for value maintenance.

As described above, as the size in height × width in the rectangular parallelepiped range as the object to be processed for value maintenance, the same size as or a different size from the size in height × width of the binary operation kernel G of the binary operation layer 112 can be adopted. This means that the same size as or a different size from the size in height × width of the binary operation kernel G can be adopted as the size in height × width of the value maintenance kernel.

<Processing of Value Maintenance Layer 121>

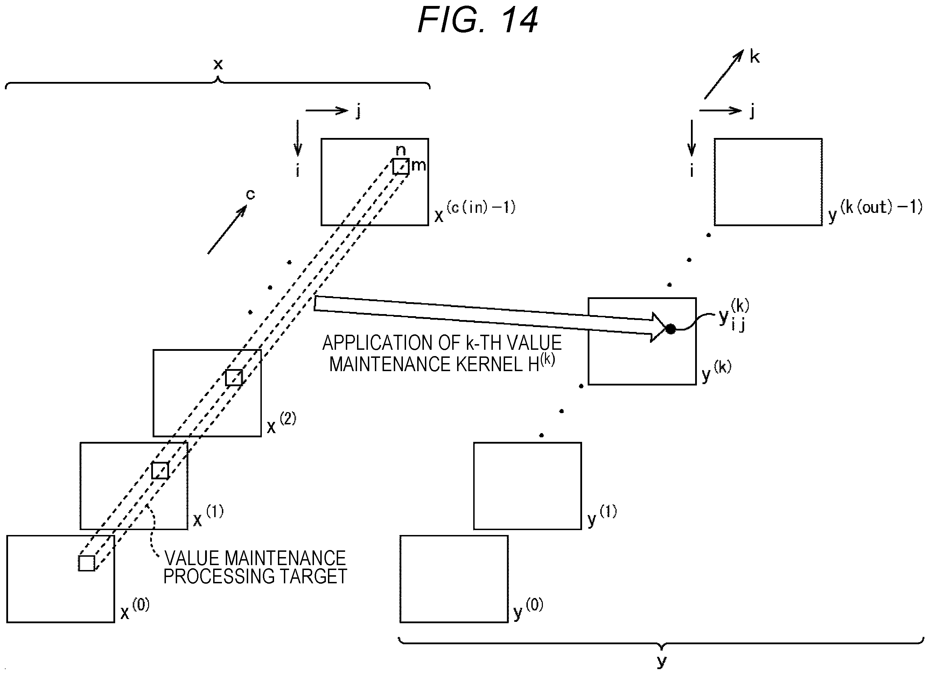

Fig. 14 is a diagram for describing an example of value maintenance processing of the value maintenance layer 121.

In Fig. 14, the map x is the layer input data x for the value maintenance layer 121. The map x is the map of (c (in), M, N), in other words, the image of the c (in) channel with M × N in height × width, and is configured by the maps

$x^{(0)}$, $x^{(1)}$,..., and $x^{(c(in)-1)}$ of the c (in) channel, similarly to the case in Fig. 8.

Furthermore, in Fig. 14, the map y is the layer output data y output by the value maintenance layer 121. The map y is the map of (k (out), M, N), in other words, the image of k (out) channel with M × N in height × width, and is configured by the maps $y^{(0)}$, $y^{(1)}$,..., and $y^{(k(out)-1)}$ of the k (out) channel, similarly to the case in Fig. 8.

The value maintenance layer 121 has k (out) value maintenance kernels H with m × n × c (in) in height × width × channel. Here, 1 <= m <= M, 1 <= n <= N, and 1 < m × n <= M × N.

The value maintenance layer 121 applies the (k + 1)th value maintenance kernel $H^{(k)}$, of the k (out) value maintenance kernels H, to the map x to obtain the map $y^{(k)}$ of the channel #k.

In other words, the value maintenance layer 121 sequentially sets the pixels at the same position of all the channels of the map x as the pixels of interest, and sets the rectangular parallelepiped range with m × n × c (in) in height × width × channel centered on the position of the pixel of interest, for example, as the object to be processed for value maintenance, on the map x.

Then, the value maintenance layer 121 applies the (k + 1)th value maintenance kernel $H^{(k)}$ to the object to be processed set to the pixel of interest on the map x to acquire a value of one piece of data in the object to be processed.

In a case where the object to be processed to which the value maintenance kernel $H^{(k)}$ has been applied is an object to be processed in the i-th object in the vertical direction and in the j-th object in the horizontal direction, the value acquired by applying the value maintenance kernel $H^{(k)}$ is the data (pixel value) $y_{ij}^{(k)}$ of the position (i, j) on the map $y^{(k)}$ of the channel #k.

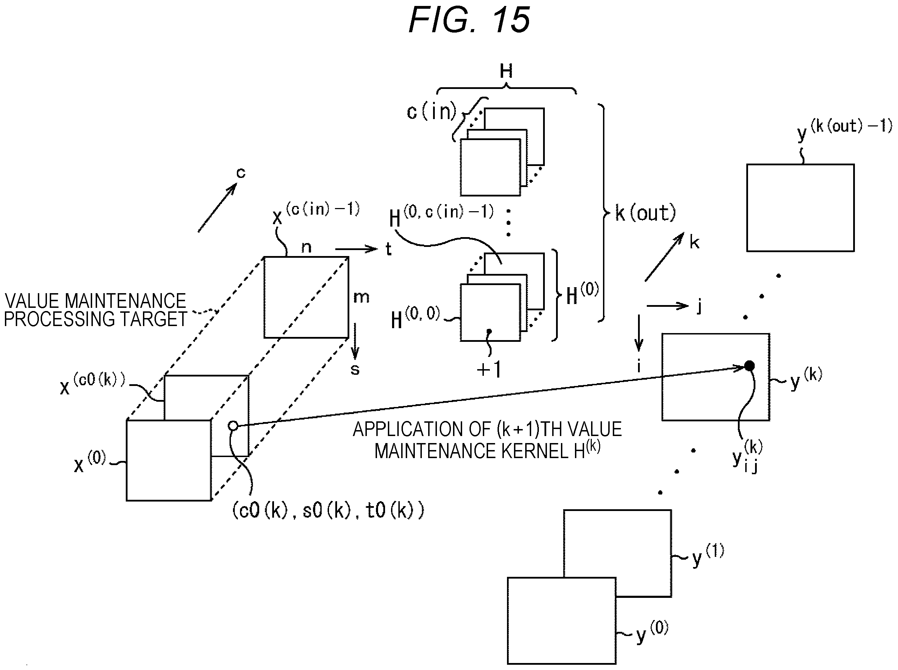

Fig. 15 is a diagram illustrating a state in which a value maintenance kernel $H^{(k)}$ is applied to an object to be processed.

As described with reference to Fig. 14, the value maintenance layer 121 has k (out) value maintenance kernels H with m × n × c (in) in height × width × channel.

Here, k (out) value maintenance kernels H are represented as $H^{(0)}$, $H^{(1)}$,..., and $H^{(k(out)-1)}$.

The value maintenance kernel $H^{(k)}$ is configured by value maintenance kernels $H^{(k,0)}$, $H^{(k,1)}$,..., and $H^{(k,c(in)-1)}$ of the c (in) channel respectively applied to the maps $x^{(0)}$, $x^{(1)}$,..., and $x^{(c(in)-1)}$ of the c (in) channel.

In the value maintenance layer 121, the m × n × c (in) value maintenance kernel $H^{(k)}$ is slidingly applied to the map x of (c(in), M, N), whereby the value of one piece of data in the object to be processed with m × n × c (in) in height × width × channel, to which the value maintenance kernels $H^{(k)}$ is applied, is acquired on the map x, and the map $y^{(k)}$ of the channel #k, which includes the acquired value, is generated.

Note that, similarly to the case in Fig. 3, as for the m × n × c (in) value maintenance kernel $H^{(k)}$ and the range with m × n in height × width in a spatial direction (directions of i and j) of the map x to which the m × n × c (in) value maintenance kernel $H^{(k)}$ is applied, positions in the vertical direction and the horizontal direction, as a predetermined position, with an upper left position of the m × n range as a reference, for example, are represented as s and t, respectively.

Furthermore, in applying the value maintenance kernel $H^{(k)}$ to the map x, padding is performed for the map x, and as described in Fig. 3, the number of data padded in the vertical direction from the boundary of the map x is represented by p and the number of data padded in the horizontal direction is represented by q. Padding can be made absent by setting p = q = 0.

Here, as described in Fig. 13, the value maintenance processing can be captured as processing of applying the value maintenance kernel having only one filter coefficient in which the filter coefficient to be applied to one piece of data d1 is +1, to the object to be processed for value maintenance to obtain a product (+1 × d1), for example.

Now, positions in channel direction, height, and width (c, s, t) in the object to be processed of the data d1 with which the filter coefficient +1 of the value maintenance kernel $H^{(k)}$ is integrated are represented as (c0(k), s0(k), t0(k)).

In the value maintenance layer 121, forward propagation for applying the value maintenance kernel H to the map x to perform value maintenance processing to obtain the map y is expressed by the expression (6).

[Expression 6]

$$y_{ij}^{(k)} = x_{(i-p+s0(k))(j-q+t0(k))}^{(c0(k))}$$

$$\cdots \quad (6)$$

Furthermore, back propagation is expressed by the expression (7).

[Expression 7]

$$\frac{\partial E}{\partial x_{ij}^{(c)}}$$

$$= \sum_{k \in k0(c)} \frac{\partial E}{\partial y_{(i+p-s0(k))(j+q-t0(k))}^{(k)}} \frac{\partial y_{(i+p-s0(k))(j+q-t0(k))}^{(k)}}{\partial x_{ij}^{(c)}}$$

$$= \sum_{k \in k0(c)} \frac{\partial E}{\partial y_{(i+p-s0(k))(j+q-t0(k))}^{(k)}} \times (+1)$$

$$\cdots \quad (7)$$

$\partial E/\partial x_{ij}^{(c)}$ in the expression (7) is error information propagated back to the lower layer immediately before the value maintenance layer 121, in other words, to the convolution layer 111 in Fig. 13, at the learning of the NN 120.

Here, the layer output data $y_{ij}^{(k)}$ of the value maintenance layer 121 is the layer input data $x_{ij}^{(c)}$ of the hidden layer 105 that is the upper layer immediately after the value maintenance layer 121.

Therefore, $\partial E/\partial y_{(i+p-s0(k))(j+q-t0(k))}^{(k)}$ on the right side in the expression (7) represents a partial differential in the layer output data $y_{(i+p-s0k)(j+q-t0k))}^{(k)}$ of the value maintenance layer 121 but is equal to $\partial E/\partial x_{ij}^{(c)}$ obtained in the hidden layer 105 and is error information propagated back to the value maintenance layer 121 from the hidden layer 105.

In the value maintenance layer 121, the error information $\partial E/\partial x_{ij}^{(c)}$ in the expression (7) is obtained using the error information $\partial E/\partial x_{ij}^{(c)}$ from the hidden layer 105 that is the upper layer, as the error information $\partial E/\partial y_{(i+p-s0(k))(j+q-t0(k))}^{(k)}$.

Furthermore, in the expression (7), k0(c) that defines a range of summarization ($\Sigma$) represents a set of k of the data $y_{ij}^{(k)}$ of the map $y^{(k)}$ obtained using the data $x_{s0(k)t0(k)}^{(c0(k))}$ of the positions (c0(k), s0(k), t0(k)) in the object to be processed on the map x.

The summarization of the expression (7) is taken for k belonging to k0(c).

Note that, since the value maintenance layer 121 that performs the value maintenance processing is a subset of the convolution layer, the forward propagation and the back propagation of the value maintenance layer 121 can be expressed by the expressions (6) and (7), and can also be expressed by the expressions (1) and (3) that express the forward propagation and the back propagation of the convolution layer.

In other words, the value maintenance kernel of the value maintenance layer 121 can be captured as the kernel having the filter coefficients having the same size as the object to be processed for value maintenance, in which the filter coefficient to be applied to the one piece of data d1 is +1 and the filter coefficient to be applied to the other data is 0, as described in Fig. 13.

Therefore, the expressions (1) and (3) express the forward propagation and the back propagation of the value maintenance layer 121 by setting the filter coefficients $w_{st}^{(k,c)}$ to be applied to the one piece of data d1 as +1, and the filter coefficient $w_{st}^{(k,c)}$ to be applied to the other data as 0.

Whether the forward propagation and the back propagation of the value maintenance layer 121 is realized by either the expressions (1) and (3) or the expressions (6) and (7) can be determined according to the specifications or the like of the hardware and software that realize the value maintenance layer 121.

Note that, the value maintenance layer 121 is a subset of the convolutional layer, also a subset of the LCL, and also a subset of the fully connection layer. Therefore, the forward propagation and the back propagation of the value maintenance layer 121 can be expressed by the expressions (1) and (3) expressing the forward propagation and the back propagation of the convolution layer, can also be expressed by expressions expressing the forward propagation and the back propagation of the LCL, and can also be expressed by expressions expressing the forward propagation and the back propagation of the fully connected layer.

Furthermore, the expressions (6) and (7) do not include a bias term, but the forward propagation and the back propagation of the value maintenance layer 121 can be expressed by expressions including a bias term.

In the NN 120 in Fig. 13, in the convolution layer 111, the 1 $\times$ 1 convolution is performed, and the binary operation kernel with m $\times$ n in height $\times$ width is applied to the map obtained as a result of the convolution in the binary operation layer 112, and the value maintenance kernel with m $\times$ n in height $\times$ width is applied in the value maintenance layer 121.

According to the above-described NN 120, the convolution with similar performance to the m $\times$ n convolution

can be performed with the reduced number of filter coefficients $w_{00}^{(k,c)}$ of the convolution kernel F as the number of parameters and the reduced calculation amount to $1/(m \times n)$, similarly to the case of the NN 110 in Fig. 7. Furthermore, according to the NN 120, the information of the difference between the values of the two pieces of data and the information of the absolute value of the data are propagated to the subsequent layers of the binary operation layer 112 and the value maintenance layer 121, and as a result, the detection performance for detecting the object and the like can be improved, as compared with a case not provided with the value maintenance layer 121.

Note that, in Fig. 13, the binary operation layer 112 and the value maintenance layer 121 are provided in parallel. However, for example, the convolution layer and the binary operation layer 112 can be provided in parallel, or the convolution layer, the binary operation layer 112, and the value maintenance layer 121 can be provided in parallel.

<Configuration Example of NN Generation Device>

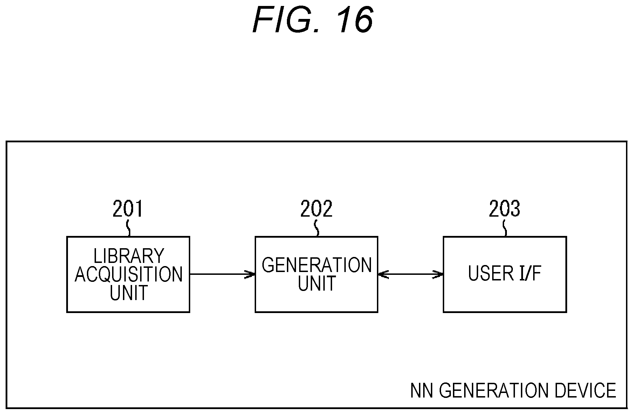

Fig. 16 is a block diagram illustrating a configuration example of an NN generation device that generates an NN to which the present technology is applied.

The NN generation device in Fig. 16 can be functionally realized by, for example, the PC 10 in Fig. 1 executing a program as the NN generation device.

In Fig. 16, the NN generation device includes a library acquisition unit 201, a generation unit 202, and a user interface (I/F) 203.

The library acquisition unit 201 acquires, for example, a function library of functions functioning as various layers of the NN from the Internet or another storage.

The generation unit 202 acquires the functions as layers of the NN from the function library acquired by the library acquisition unit 201, in response to an operation signal corresponding to an operation of the user I/F 203, in other words, an operation of the user supplied from the user I/F 203, and generates the NN configured by the layers.

The user I/F 203 is configured by a touch panel or the like, and displays the NN generated by the generation unit 202 as a graph structure. Furthermore, the user I/F 203 accepts the operation of the user, and supplies the corresponding operation signal to the generation unit 202.

In the NN generation device configured as described above, the generation unit 202 generates the NN including the binary operation layer 112 and the like, for example, using the function library as the layers of the NN acquired by the library acquisition unit 201, in response to the operation of the user I/F 203.

The NN generated by the generation unit 202 is displayed by the user I/F 203 in the form of a graph structure.

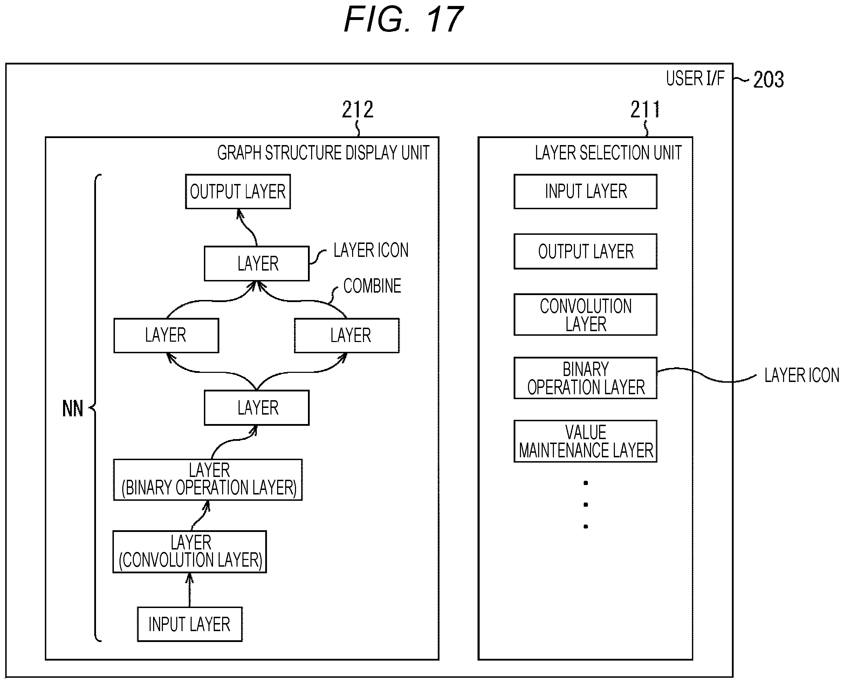

Fig. 17 is a diagram illustrating a display example of the user I/F 203.

In a display region of the user I/F 203, a layer selection unit 211 and a graph structure display unit 212 are displayed, for example.

The layer selection unit 211 displays a layer icon that is an icon representing a layer selectable as a layer configuring the NN. In Fig. 17, layer icons of an input layer, an output layer, a convolution layer, a binary operation layer, a value maintenance layer, and the like are displayed.

The graph structure display unit 212 displays the NN generated by the generation unit 202 as a graph structure.

For example, when the user selects the layer icon of a desired layer such as the binary operation layer from the layer selection unit 211, and operates the user I/F 203 to connect the layer icon with another layer icon already displayed on the graph structure display unit 212, the generation unit 202 generates the NN in which the layer represented as the layer icon selected by the user and the layer represented as the another layer icon are connected, and displays the NN on the graph structure display unit 212.

In addition, when the user I/F 203 is operated to delete or move the layer icon displayed on the graph structure display unit 212, connect the layer icons, cancel the connection, or the like, for example, the generation unit 202 regenerates the NN after the deletion or movement of the layer icon, connection of the layer icons, cancellation of the connection, or the like is performed in response to the operation of the user I/F 203, and redisplays the NN on the graph structure display unit 212.

Therefore, the user can easily configure NNs having various network configurations.

Further, in Fig. 17, since the layer icons of the convolution layer, the binary operation layer, and the value maintenance layer are displayed in the layer selection unit 211, the NN 100 including such a convolution layer, a binary operation layer, and a value maintenance layer, and NNs such as NN 110 and NN 120 can be easily configured.

The entity of the NN generated by the generation unit 202 is, for example, a program that can be executed by the PC 10 in Fig. 1, and by causing the PC 10 to execute the program, the PC 10 can be caused to function as an NN such as NN 100, NN 110, or NN 120.

Note that the user I/F 203 can display, in addition to the layer icons, an icon for specifying the activation function, an icon for specifying the sizes in height $\times$ width of the binary operation kernel and other kernels, an icon for selecting the method of selecting the binary positions that are to be the objects for binary operation, an icon for selecting the method of selecting the position of the value to be the object for value maintenance processing, an icon for assisting configuration of an NN by the user, and the like.

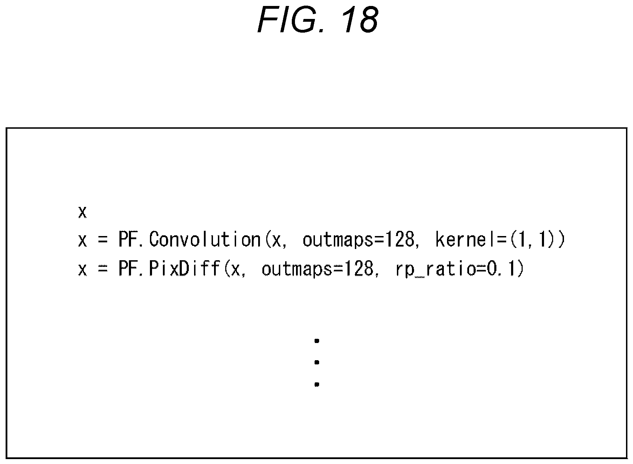

Fig. 18 is a diagram illustrating an example of a program as an entity of the NN generated by the generation unit 202.

In Fig. 18, x in the first row represents the layer output data output by the input layer.

PF.Convolution (x, outmaps = 128, kernel = (1, 1)) represents a function as the convolution layer that performs convolution for x. In PF.Convolution (x, outmaps = 128, kernel = (1, 1)), kernel = (1, 1) represents that the height × width of the convolution kernel is 1 × 1, and outmaps = 128 represents that the number of channels of the map (layer output data) output from the convolutional layer is 128 channels.

In Fig. 18, the map of 128 channels obtained by PF.Convolution (x, outmaps = 128, kernel = (1, 1)) as the convolution layer is set to x.

PF.PixDiff (x, outmaps = 128, rp_ratio = 0.1) represents a function as the binary operation layer that performs the difference operation as the binary operation for x and the value maintenance layer that performs the value maintenance processing. In PF.PixDiff (x, outmaps = 128, rp ratio = 0.1), outmaps = 128 represents that the total number of channels of the maps (layer output data) output from the binary operation layer and the value maintenance layer is 128 channels, and rp ratio = 0.1 represents that 10% of the 128 channels is the output of the value maintenance layer and the remaining is the output of the binary operation layer.

Note that, in the present embodiment, the NNs 110 and 120 include both the convolution layer 111 and the binary operation layer 112. However, the NNs 110 and 120 may be configured without including the convolution layer 111. In other words, the binary operation layer 112 is a layer having new mathematical characteristics as a layer of the NN, and can be used alone as a layer of the NN without being combined with the convolution layer 111.

Here, in the present specification, the processing performed by the computer (PC 10) in accordance with the program does not necessarily have to be performed in chronological order in accordance with the order described as the flowchart. In other words, the processing performed by the computer in accordance with the program also includes processing executed in parallel or individually (for example, parallel processing or processing by an object).

Furthermore, the program may be processed by one computer (processor) or may be processed in a distributed manner by a plurality of computers. Moreover, the program may be transferred to a remote computer and executed.

Moreover, in the present specification, the term "system" means a group of a plurality of configuration elements (devices, modules (parts), and the like), and whether or not all the configuration elements are in the same casing is irrelevant. Therefore, a plurality of devices housed in separate casings and connected via a network, and one device that houses a plurality of modules in one casing are both systems.

Note that embodiments of the present technology are not limited to the above-described embodiments, and various modifications can be made without departing from the gist of the present technology.

For example, in the present technology, a configuration of cloud computing in which one function is shared and processed in cooperation by a plurality of devices via a network can be adopted.

Furthermore, the steps described in the above-described flowcharts can be executed by one device or can be shared and executed by a plurality of devices.

Moreover, in the case where a plurality of processes is included in one step, the plurality of processes included in the one step can be executed by one device or can be shared and executed by a plurality of devices.

Furthermore, the effects described in the present specification are merely examples and are not limited, and other effects may be exhibited.

Note that the present technology can have the following configurations.

<1> An information processing apparatus configuring a layer of a neural network, and configured to perform a binary operation using binary values of layer input data to be input to the layer, and output a result of the binary operation as layer output data to be output from the layer.

<2> The information processing apparatus according to <1>, configured to perform the binary operation by applying a binary operation kernel for performing the binary operation to the layer input data.

<3> The information processing apparatus according to <2>, configured to perform the binary operation by slidingly applying the binary operation kernel to the layer input data.

<4> The information processing apparatus according to <2> or <3>, configured to apply the binary operation kernels having different sizes in a spatial direction between a case of obtaining one-channel layer output data and a case of obtaining another one-channel layer output data.

<5> The information processing apparatus according to any one of <1> to <4>, configured to acquire error information regarding an error of output data output from an output layer of the neural network, the error information being propagated back from an upper layer; and

**EP 3 594 858 A1**

configured to obtain error information to be propagated back to a lower layer using the error information from the upper layer, and propagate the obtained error information back to the lower layer.

<6> The information processing apparatus according to any one of <1> to <5>, in which
the binary operation is a difference between the binary values.

<7> The information processing apparatus according to any one of <1> to <6>,
arranged in an upper layer immediately after a convolution layer for performing convolution with a convolution kernel with a smaller size in a spatial direction than a binary operation kernel for performing the binary operation.

<8> The information processing apparatus according to <7>, in which
the convolution layer performs $1 \times 1$ convolution for applying the convolution kernel with $1 \times 1$ in height $\times$ width, and the binary operation kernel for performing the binary operation to obtain a difference between the binary values is applied to an output of the convolution layer.

<9> The information processing apparatus according to any one of <1> to <8>,
arranged in parallel with a value maintenance layer that maintains and outputs an absolute value of an output of a lower layer, in which
an output of the value maintenance layer is output to an upper layer as layer input data of a part of channels, of layer input data of a plurality of channels to the upper layer, and
a result of the binary operation is output to the upper layer as layer input data of remaining channels.

<10> The information processing apparatus according to any one of <1> to <9>, including:
hardware configured to perform the binary operation.

<11> An information processing apparatus including:
a generation unit configured to perform a binary operation using binary values of layer input data to be input to a layer, and generate a neural network including a binary operation layer that is the layer that outputs a result of the binary operation as layer output data to be output from the layer.

<12> The information processing apparatus according to <11>, in which
the generation unit generates the neural network configured by a layer selected by a user.

<13> The information processing apparatus according to <11> or <12>, further including:
a user I/F configured to display the neural network as a graph structure.

REFERENCE SIGNS LIST

| 10 | PC |
| 11 | Bus |
| 12 | CPU |
| 13 | ROM |
| 14 | RAM |
| 15 | Hard disk |
| 16 | Output unit |
| 17 | Input unit |
| 18 | Communication unit |
| 19 | Drive |
| 20 | Input/output interface |
| 21 | Removable recording medium |
| 100 | NN |
| 101 | Input layer |
| 102 | NN |
| 103 | Hidden layer |
| 104 | Convolution layer |
| 105 | Hidden layer |
| 106 | NN |
| 107 | Output layer |
| 111 | Convolution layer |
| 112 | Binary operation layer |
| 121 | Value maintenance layer |
| 201 | Library acquisition unit |
| 202 | Generation unit |
| 203 | User I/F |

211    Layer selection unit
212    Graph structure display unit

**Claims**

1.  An information processing apparatus
    configuring a layer of a neural network, and configured to perform a binary operation using binary values of layer input data to be input to the layer, and output a result of the binary operation as layer output data to be output from the layer.

2.  The information processing apparatus according to claim 1,
    configured to perform the binary operation by applying a binary operation kernel for performing the binary operation to the layer input data.

3.  The information processing apparatus according to claim 2,
    configured to perform the binary operation by slidingly applying the binary operation kernel to the layer input data.

4.  The information processing apparatus according to claim 2,
    configured to apply the binary operation kernels having different sizes in a spatial direction between a case of obtaining one-channel layer output data and a case of obtaining another one-channel layer output data.

5.  The information processing apparatus according to claim 1,
    configured to acquire error information regarding an error of output data output from an output layer of the neural network, the error information being propagated back from an upper layer; and
    configured to obtain error information to be propagated back to a lower layer using the error information from the upper layer, and propagate the obtained error information back to the lower layer.

6.  The information processing apparatus according to claim 1, wherein
    the binary operation is a difference between the binary values.

7.  The information processing apparatus according to claim 1,
    arranged in an upper layer immediately after a convolution layer for performing convolution with a convolution kernel with a smaller size in a spatial direction than a binary operation kernel for performing the binary operation.

8.  The information processing apparatus according to claim 7, wherein
    the convolution layer performs $1 \times 1$ convolution for applying the convolution kernel with $1 \times 1$ in height $\times$ width, and
    the binary operation kernel for performing the binary operation to obtain a difference between the binary values is applied to an output of the convolution layer.

9.  The information processing apparatus according to claim 1,
    arranged in parallel with a value maintenance layer that maintains and outputs an absolute value of an output of a lower layer, wherein
    an output of the value maintenance layer is output to an upper layer as layer input data of a part of channels, of layer input data of a plurality of channels to the upper layer, and
    a result of the binary operation is output to the upper layer as layer input data of remaining channels.

10. The information processing apparatus according to claim 1, comprising:
    hardware configured to perform the binary operation.

11. An information processing apparatus comprising:
    a generation unit configured to perform a binary operation using binary values of layer input data to be input to a layer, and generate a neural network including a binary operation layer that is the layer that outputs a result of the binary operation as layer output data to be output from the layer.

12. The information processing apparatus according to claim 11, wherein
    the generation unit generates the neural network configured by a layer selected by a user.

**13.** The information processing apparatus according to claim 11, further comprising:
a user I/F configured to display the neural network as a graph structure.

# FIG. 1

EP 3 594 858 A1

# FIG. 2

100
NN

OUTPUT DATA, ERROR (LOSS)

FORWARD PROPAGATION

BACK PROPAGATION

| OUTPUT LAYER | ~107 |

NN ~106

| HIDDEN LAYER (MAP OF (128, 32, 32)) | ~105 |

| CONVOLUTION LAYER (3×3×64 CONVOLUTION KERNEL×128) | ~104 |

| HIDDEN LAYER (MAP OF (64, 32, 32)) | ~103 |

NN ~102

| INPUT LAYER | ~101 |

INPUT DATA

FIG. 3

# FIG. 4

## FIG. 5

3×3 (×3) CONVOLUTION KERNEL                    MAP x OF THREE CHANNELS

*FIG. 6*

$w_{00}^{(k, 2)}$

$+1$ ~ $F^{(k, 2)}$

A2

$\sim x^{(2)}$

B2

$w_{00}^{(k, 2)} \times A2$

$w_{00}^{(k, 1)}$

$+1$ ~ $F^{(k, 1)}$

A1 —

$w_{00}^{(k, 1)} \times A1$

$\sim x^{(1)}$

B1

$y_{00}^{(k)}$

$w_{00}^{(k, 0)}$

$+1$ ~ $F^{(k, 0)}$

A0

$w_{00}^{(k, 0)} \times A0$

$\sim x^{(0)}$

B0

$\sim y^{(k)}$

$\sim y_{22}^{(k)}$

1×1 (×3) CONVOLUTION KERNEL     MAP x OF THREE CHANNELS     MAP y

EP 3 594 858 A1

# FIG. 7

110
NN

FORWARD PROPAGATION — OUTPUT DATA, ERROR (LOSS) — BACK PROPAGATION

| OUTPUT LAYER | ~107 |

NN ~106

| HIDDEN LAYER (MAP OF (128, 32, 32)) | ~105 |

| BINARY OPERATION LAYER (3×3 BINARY OPERATION KERNEL×128) | ~112 |

| CONVOLUTION LAYER (1×1×64 CONVOLUTION KERNEL×128) | ~111 |

| HIDDEN LAYER (MAP OF (64, 32, 32)) | ~103 |

NN ~102

| INPUT LAYER | ~101 |

INPUT DATA

# FIG. 8

APPLICATION OF (k+1)TH
BINARY OPERATION KERNEL $G^{(k)}$

BINARY OPERATION
PROCESSING TARGET

$x^{(c(in)-1)}$

$x^{(2)}$

$x^{(1)}$

$x^{(0)}$

$y^{(k(out)-1)}$

$y_{ij}^{(k)}$

$y^{(k)}$

$y^{(1)}$

$y^{(0)}$

EP 3 594 858 A1

FIG. 9

EP 3 594 858 A1

## FIG. 11

FORWARD PROPAGATION PROCESSING

ACQUIRE MAP FROM LOWER LAYER — S11

APPLY CONVOLUTION KERNEL TO MAP TO PERFORM CONVOLUTION OPERATION — S12

ACQUIRE MAP FROM CONVOLUTION LAYER — S13

APPLY BINARY OPERATION KERNEL TO MAP TO PERFORM BINARY OPERATION — S14

END

BACK PROPAGATION PROCESSING

ACQUIRE ERROR INFORMATION FROM UPPER LAYER — S21

OBTAIN ERROR INFORMATION TO BE PROPAGATED BACK TO CONVOLUTION LAYER USING ERROR INFORMATION FROM UPPER LAYER AND PROPAGATE ERROR INFORMATION BACK TO CONVOLUTION LAYER — S22

ACQUIRE ERROR INFORMATION FROM BINARY OPERATION LAYER — S23

OBTAIN GRADIENT OF ERROR TO BE USED FOR UPDATE OF COEFFICIENT $w_{st}^{(k,\,c)}$ OF CONVOLUTION KERNEL OF CONVOLUTION LAYER USING ERROR INFORMATION FROM BINARY OPERATION LAYER — S24

UPDATE COEFFICIENT $w_{st}^{(k,\,c)}$ OF CONVOLUTION KERNEL OF CONVOLUTION LAYER USING GRADIENT OF ERROR — S25

OBTAIN ERROR INFORMATION TO BE PROPAGATED BACK TO LOWER LAYER USING ERROR INFORMATION FROM BINARY OPERATION LAYER AND PROPAGATE ERROR INFORMATION BACK TO LOWER LAYER — S26

END

## FIG. 12

# FIG. 13

FORWARD PROPAGATION → OUTPUT DATA, ERROR (LOSS) ← BACK PROPAGATION

NN ~120

OUTPUT LAYER ~107

NN ~106

105~ HIDDEN LAYER (MAP OF (128, 32, 32))

121~ VALUE MAINTENANCE LAYER (3×3 VALUE MAINTENANCE KERNEL×(128−L)) | BINARY OPERATION LAYER (3×3 BINARY OPERATION KERNEL×L) ~112

(MAP OF (128, 32, 32))

CONVOLUTION LAYER (1×1×64 CONVOLUTION KERNEL×128) ~111

HIDDEN LAYER (MAP OF (64, 32, 32)) ~103

NN ~102

INPUT LAYER ~101

INPUT DATA

EP 3 594 858 A1

FIG. 14

APPLICATION OF k-TH VALUE
MAINTENANCE KERNEL $H^{(k)}$

VALUE MAINTENANCE
PROCESSING TARGET

EP 3 594 858 A1

*FIG. 15*

EP 3 594 858 A1

# FIG. 16

201
LIBRARY ACQUISITION UNIT

202
GENERATION UNIT

203
USER I/F

NN GENERATION DEVICE

# FIG. 17

USER I/F —203

## GRAPH STRUCTURE DISPLAY UNIT (212)

OUTPUT LAYER

LAYER — LAYER ICON

COMBINE

LAYER        LAYER

LAYER

LAYER
(BINARY OPERATION LAYER)

LAYER
(CONVOLUTION LAYER)

INPUT LAYER

NN

## LAYER SELECTION UNIT (211)

INPUT LAYER

OUTPUT LAYER

CONVOLUTION LAYER

BINARY OPERATION LAYER — LAYER ICON

VALUE MAINTENANCE LAYER

EP 3 594 858 A1

# FIG. 18

```
x
x = PF.Convolution(x, outmaps=128, kernel=(1,1))
x = PF.PixDiff(x, outmaps=128, rp_ratio=0.1)

                              .
                              .
                              .
```

<div align="center">

**INTERNATIONAL SEARCH REPORT**

</div>

| | International application No. |
|---|---|
| | PCT/JP2018/005828 |

| A. CLASSIFICATION OF SUBJECT MATTER |
|---|
| Int.Cl. G06N3/04(2006.01)i |
| According to International Patent Classification (IPC) or to both national classification and IPC |

| B. FIELDS SEARCHED |
|---|
| Minimum documentation searched (classification system followed by classification symbols) |
| Int.Cl. G06N3/04 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
|---|
| |

| C. DOCUMENTS CONSIDERED TO BE RELEVANT |||
|---|---|---|
| Category* | Citation of document, with indication, where appropriate, of the relevant passages | Relevant to claim No. |
| Y | JP 2014-203135 A (CANON INC.) 27 October 2014, paragraphs [0016]-[0105] (Family: none) | 1-13 |
| Y | JP 2009-211178 A (CANON INC.) 17 September 2009, paragraphs [0043], [0069]-[0076], [0122], [0126] & US 2009/0220156 A1, paragraphs [0069], [0097]-[0105], [0151], [0158] | 1-13 |
| Y | JP 2009-080693 A (CANON INC.) 16 April 2009, fig. 7 & US 2010/0214936 A1, fig. 7 & WO 2009/041350 A1 & CN 101809597 A | 9 |

☐ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 April 2018 (17.04.2018) | 01 May 2018 (01.05.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4517633 B